(19) Europäisches Patentamt
European Patent Office
Office européen des brevets

(11) Publication number: 0 116 881
A2

(12) EUROPEAN PATENT APPLICATION

(21) Application number: 84101074.7

(22) Date of filing: 02.02.84

(51) Int. Cl.³: G 11 B 5/64
G 11 B 5/84, H 01 F 10/18

(30) Priority: 03.02.83 JP 16760/83
07.02.83 JP 18345/83
09.02.83 JP 20509/83
15.02.83 JP 23042/83
15.02.83 JP 23045/83
15.02.83 JP 23046/83
15.02.83 JP 23047/83
15.02.83 JP 23048/83
15.02.83 JP 23049/83
15.02.83 JP 23050/83

(43) Date of publication of application:
29.08.84 Bulletin 84/35

(84) Designated Contracting States:
DE FR GB NL

(71) Applicant: KONISHIROKU PHOTO INDUSTRY CO. LTD.
No. 26-2, Nishishinjuku 1-chome Shinjuku-ku
Tokyo 160(JP)

(72) Inventor: Naoe, Masahiko
1-36-10 Kitasenzoku Ota-ku
Tokyo(JP)

(72) Inventor: Ishibashi, Shozo
432-7-1 Terada-cho Hachioji-shi
Tokyo(JP)

(74) Representative: Patentanwälte Henkel, Pfenning, Feiler, Hänzel & Meinig
Möhlstrasse 37
D-8000 München 80(DE)

(54) Magnetic recording medium and process of manufacturing the same.

(57) A magnetic recording medium comprising a substrate and a magnetic layer thereon, the magnetic layer

(a) being a continuous magnetic layer made mainly from iron oxides, and

(b) having not less than 0.5 of ratio between perpendicular-to-plane residual magnetization and in-plane residual magnetization of said magnetic layer, $M_V/M_H$.

A process of manufactuing a magnetic recording medium comprising a substrate and a continuous magnetic layer made mainly from iron oxides formed thereon and having not less than 0.5 of ratio between perpendicular-to-plane residual magnetization, $M_V$, and in-plane residual magnetization, $M_H$, of magnetic layer: $M_V/M_H$, comprising causing particles to be component of said magnetic layer to fly and be deposited on said substrate.

EP 0 116 881 A2

# SPECIFICATION

## BACKGROUND OF THE INVENTION

### Title of the invention

Magnetic recording medium and process of manufacturing the same

### Field of the invention

This invention relates to a magnetic recording medium such as magnetic tape and disk and a process of manufacturing the same .

### Description of the prior art

So far magnetic recording media are extensively used in recording various (video, audio and digital) electrical signals. They have been developed to be used in recording process by which magnetization were brought longitudinally in the plane of the magnetic layer formed over a substrate. Increasingly higher density of magnetic recording in more recent years requires shorter and shorter wavelength of record signal, which caused increase in diamagnetic field in the medium, resulting in decline and rotation of residual magnetization and in turn in remarkably reduced output of reproduction. This makes it very difficult to apply record- wavelength of not more than submicron order.

On the other hand, recently proposed perpendicular magnetization recording process by which magnetization is brought perpendicularly to the magnetic layer plane of a magnetic recording medium, for example, as present in Nikkey Electronics (JPN) No. 192: Aug. 7, 1978. It has advantageous characteristic at higher density that the shorter the record wavelength, the diamagnetic field acting the residual magnetization in the medium gets lower, thus leading us to an inference that it is intrinsically preferred to the use in high density recording.

It is essential for high efficient accomplishment of perpendicular recording like this that the recording layer of the magnetic recording medium should have perpendicular anisotropy of magnetization or magnetizable through the thickness. For example are known magnetic recording media with a magnetic layer formed by applying mixture mainly of magnetic powder with binder so as to have magnetization anisotropy oriented perpendicularly to the plane of the magnetic layer. Typical magnetic powders suitable for use in recording media of this kind are Co, $Fe_3O_4$, $\gamma$-$Fe_2O_3$, Co-added $Fe_3O_4$, Co-added $\gamma$-$Fe_2O_3$, hexagonal system ferrite, such as barium ferrite, MnBi (Japanese Laid-open Patent Application Nos. 46803/1977, 67406/1978, 86103/1980, 78403/1977 and 87202/1979). These painted media, however, contains nonmagnetic binder in the magnetic layer, limiting increase in filling density of magnetic powder, and so cannot permit enough increase in S/N ratio. They have additional disadvantages, for instance, dependence of the signal-recorded dimentions on the size of the magnetic particle, and thus can be concluded to be inadequate for perpendicular magnetization recording.

Under the circumstance, attention is drawn, as suitable for use in high density recording, to a continuous thin film magnetic recording medium comprising a substarate and such as a perpendicularly magnetizable magnetic layer formed by continuous coating of magnetic material without utilizing a binder.

The continuous thin film recording medium suitable for use in perpendicular magnetization recording, for instance as disclosed in Japanese Patent Publication No. 57-17282, comprises a magnetic recording layer of a Co-Cr alloy film. It describes that films of Co-Cr alloys containing Cr in 5 to 25 % by weight are specially superior. Another magnetic recording medium having a Co-Cr alloy film and a magnetic layer contaning rhodium not more than 30 % by weight was disclosed in Japanese Laid-open Patent Application No. 55-111110. Further magnetic recording media were known which has either a film of cobalt-vanadium alloy (for example, "Transaction on Magnetism" of IEEE (USA) 18(6): 1116, 1982, or a film of cobalt-ruthenium alloy, for example, described in the reports on perpendicular magnetization recording at the 18th Symposium Of Communication Institute, Tohhoku University, on March, 1982.

Out of these, the Co-Cr alloy film, though promising for use in perpendicular magnetization recording, is disadvantageous in the following:

(1) For the orientation of magnetization anisotropy perpendicularly to the magnetic layer plane, it is particularly necessary to form a magnetic layer at high vacuums of $10^{-7}$ or smaller Torr, and to meet the conditions such as high-technical cleaning treatment of substrates and low sputtering speed. These makes controlling factors for accomplishing perpendicular orientation extremely complicated.

(2) During recording and reproduction of signals, inevitably relative sliding of magnetic recording medium and perpendicular recording and reproduction head is associated with bad interface, so that the medium and head are liable to flaws and damage.

(3) The hard magnetic layer is liable to cracks, if it is formed over a flexible substrate.

(4) Because of insufficient errosion-proofness for use in the magnetic recording medium, it is necessary to provide over the surface with protective coating.

(5) Raw material, cobalt is available with instability and at high costs.

## OBJECTS AND SUMMARY OF THE INVENTION

It is an object of the invention to provide a magnetic recording medium with a magnetic layer having particular magnetization anisotropy, and besides characterized by superiority in residual magnetization and coercive force.

Another object of the invention is to provide a magnetic recording medium superior, for example, in mechanical strength and chemical stability.

Further object of the invention is to provide a process of manufacturing the above-mentioned media at high speeds.

Magnetic recording medium according to the invention comprises a substrate and a magnetic layer thereon, the magnetic layer

(a) being a continuous magnetic layer made mainly from iron oxides, and

(b) having not less than 0.5 of ratio between perpendicular-to-plane residual magnetization and in-plane residual magnetization: $M_V/M_H$.

A process according to the invention of manufacturing a magnetic recording medium comprising a substrate and a continuous magnetic layer made mainly from iron oxides thereon and having not less than 0.5 of ratio between perpendicular-to-plane residual magnetization and in-plane residual magnetization of said magnetic layer: $M_V/M_H$, comprising causing particles to be component of said magnetic layer to fly and be deposited over said substrate whereby said continuous magnetic layer is formed.

## BRIEF DESCRIPTION OF THE DRAWINGS

Other features and advantages of the invention will be apparent from the following description taken in connection with the accompanying drawings wherein:

Fig. 1 is a sectional view of an opposed target sputtering apparatus illustrated schematically;

Fig. 2 is a cross-sectional view of a magnetic recording medium according to the invention;

Fig. 3 is the graph representing the intrinsic hysteresis loop of the magnetic recording medium;

Fig. 4 is the graph showing the intrinsic hysteresis loop of another magnetic recording medium;

Fig. 5 is the graph plotting reflectivity against gas pressure;

Fig. 6 is the graph showing the characteristic of perpendicular magnetization: $M_V/M_H$ against reflectivity;

Fig. 7 is the graph showing the characteristic of perpendicular magnetization $M_V/M_H$ against gas partial pressure;

Fig. 8 is the graph representing the intrinsic hysteresis loop of a comparative example;

Figs. 9a, b and c are cross-sectional views of magnetic layers of different thicknesses, respectively, illustrated to an enlarged scale;

Fig. 10 is the graph showing the characteristic of perpendicular magnetization: $M_V/M_H$ against thickness of the magnetic layer.

Fig. 11 is a fragmental cross-sectional view of the magnetic layer illustrated to an enlarged scale;

Fig. 12 is a fragmental cross-sectional view of the magnetic recording medium illustrated to an enlarged scale;

Fig. 13 is the graph representing the dependence of the coercive force on bulk factor, x, of the magnetic layer;

Fig. 14 is the graph showing the relationship of reproduction voltage to recording density of the magnetic layer;

Fig. 15 is the cross-sectional view of another magnetic recording medium;

Fig. 16 is the graph showing the characteristic curves obtained by forced deterioration testing;

Fig. 17 is the graph representing the characteristic variation with roughness of the substrate surface;

Fig. 18 is the graph showing characteristics of reproduction voltage at various roughnesses of the substrate surface against recording density;

Fig. 19 is the graph representing the course of residual magnetization ratio varying with substrate temperature;

Fig. 20 is the graph showing the dependence of X-ray diffraction against applied magnetic field;

Fig. 21 is the graph representing the change in speed of forming magnetic film with increasing target temperature;

Fig. 22 is the graph representing the dependence of residual magnetization ratio on target thickness;

Fig. 23 is a cross-sectional view of a vacuum evaporation coating apparatus illustrated schematically; and

Fig. 24 is a cross-sectional view of a gas discharge tube.

## DISCRIPTION OF THE PREFERRED EMBODIMENTS

The invention will be described more fully by examples with reference to the accompanying drawings hereinafter: The continuous magnetic film of a magnetic recording medium according to the invention may be referred to as "magnetic layer".

The magnetic layer of a magnetic recording medium embodying the invention composed mainly of iron oxide or oxides at not less than 50 %, preferably 70 %, by weight in total content of iron and oxygen, and preferably in 1 to 3, the most preferably 4/3 to 2, in composition ratio between oxygen and iron atoms. Compounds suitable for use in the component are such as $Fe_3O_4$, $\gamma$-$Fe_2O_3$, and intermediate iron

oxides between these. The magnetic layer, in contrast to prior art painted magnetic layer, is a continuous iron oxide film containing no binder. The term "iron oxide" refers such as to $Fe_3O_4$, $\gamma$-$Fe_2O_3$ or Berthollide compounds between these, having non-stoichiometric composition. The magnetic layer has advantages to have great mechanical strength and high chemical stability due to the oxides, and to need not always protective coating which would be necessary for alloy film recording media, this permitting smaller space between the magnetic head and the medium, contributing to higher density recording and lower cost. So far are well-known magnetic recording media with such an oxide-type magnetic film to be subjected to in-plane magnetization. But any magnetic recording medium with a magnetic layer having perpendicular magnetization anisotropy has not been obtained. After much effort for study, the inventors discovered that perpendicularly magnetizable continuous film made mainly from iron oxide could be obtained. Thus the invention has been accomplished.

The magnetic characteristics of the magnetic recording medium according to the invention were measured with a vibrating sample magnetometer (Toei Industry Co., Ltd., Japan).

If the ratio of the magnetic film between residual in-plane magnetization of the magnetic layer, which is to as $M_H$, and perpendicular residual magnetization without correcting diamagnetic effect due to the shape, which referred to as $M_H$, is not less than 0.5, magnetic moment is inclined up by about 30 degrees to the film plane. This is effective on perpendicular magnetization recording. It is preferable to be $M_V/M_H \geq 1.0$. Sensitivity for magnetic recording is inadequate for practival use, when the ratio $M_V/M_H < 0.5$.

The magnetic layer of the magnetic recording medium can contains minor constituents or additives, which are such as metallic and nonmetallic elements other than iron and oxygen, metal oxides, semimetals and their compounds, and compounds of nonmetals. These contributes to improvements in magnetic properties such as coercive force, saturated magnetization, and residual magnetization, and in crystallizability of units constituting the magnetic layer, and in anisotropy of crystals. Elements and compounds suitable to be added for attaining the improvements are such as Al, Co, Co-Mn, Zn, Co-Zn, Li, Cr, Ti, Li-Cr, Mg, Mg-Ni, Mn-Zn, Ni, Ni-Al, Ni-Zn, Cu, Cu-Mn, Cu-Zn, V, etc., as desired to be any other than rare metal elements.

According to a preferred feature of the invention, the magnetic layer composed mainly of iron oxides has substantially perpendicular anisotropy of magnetization. The construction enables the above-mentioned perpendicular magnetization characteristic with high reproducibility. It is greatly essential especially for $Fe_3O_4$ as iron oxide component that the [111] direction of the crystal axis is perpendicular to the plane, namely to be a spinel structure. Any iron oxide component of spinel crystal structure is associated with great saturated magnetization and high residual magnetic flux density, reflecting a very good sensitibity of reproduction. Typical iron oxides exhibiting magnetism are $\alpha$-$Fe_2O_3$ being parasitic ferromagnetic and rhombohedral; $Fe_3O_4$, $\gamma$-$Fe_2O_3$ and Berthollide compounds of them, which being of spinel crystal structure and having ferrimagnetism; Ba-, Sr-, Pb-ferrites and their derivatives, which are iron oxides of hexagonal system; and garnet structure ferrites of rare metals. Values of saturated magnetization, one important magnetic property, are as follows: for example, $\alpha$-$Fe_2O_3$ 2.0 Gausses, Ba-, Sr- and Pb ferrites not more than 380 Gausses, and garnet structure ferrite not more than 140 Gausses. In contrast to these, spinel structure ferrite suitable for use in embodiments according to the invention, exhibits a higher saturated magnetization as high as 480 Gausses than any iron oxide. High saturated magnetization like this causes residual magnetic flux density to be sufficiently high, and hence is greatly effective to reproduce stored signals at good sensitibity. On the other hand, Ba- and Sr- ferrites which exhibits saturation magnetic-flux density similar to those of spinel structure ferrites could be used for forming continuous thin magnetic layer, for instance, with a later-described sputtering apparatus only at maintenance temperature of substrate as high as 500°C. This reflects narrower selection of substrate material to be used, (for example, plastic substrates with poor heat resistance can not be used) and so on. They are thus problematic and unsuitable from the viewpoint of manufacture.

Spinel structure iron oxides suitable for use in embodiments according to the invention can be processed into film at relatively low temperature region between room temperature and 300°C, thus permitting generous selection of substrate material .

Besides, in the continuous layer composed of a large number of particles made mainly from iron oxide, with their boundaries adjacent to each other. The particles are subjected to the action of the above-mentioned magnetic moment to be effectively imparted perpendicular magnetization characteristc, thus it is capable of having superior perpendicular magnetization recording and retentivity. In particular, the particles are preferred to be columnar or needle-like structure with the longitudinal axis inclined, preferably substantially-perpendicular to the in-plane of the magnetic layer or to the substrate plane.

It is advantageous that bulk factor, x, which is a ratio of the density of the magnetic layer: $d_1$ (g/$cm^3$) to the density of the crystal having the identical composition with that of the magnetic layer $d_2$ ($g/cm^3$) meets the following condition: $0.60 \leq x \leq 0.95$

If $x > 0.95$, Hc falls, resulting in tendency towards poor retentivity whereas if $x < 0.60$, a shortage of residual magnetization occurs, which reflects reduction in reproduction output and the tendency towards diminution in the strength of the magnetic layer.

It is preferred to set the thickness of the magnetic layer to the specified range between 100Å and 5 μm. The prior art magnetic film cannot render it anticipate the magnetic film suitable for embodying the invention composed mainly of iron oxides and having an adequate residual magnetization ratio: $M_V/M_H$. Also in fact no attention has been paid to the range of the thickness. Under the circumstances, the inventors discovered that the perpendicularly-magnetizable iron oxide film depends for its magnetization characteristic on the thickness and have demonstrated that perpendicular magnetization is abundantly possible in the range of thickness between 100 Å and 5 μm, preferable between 200 Å and 4 μm, and more preferably between 1000 Å and 1 μm.

According to a further preferred feature of the invention, the magnetic layer is coated over a substrate at a mean surface roughness R ranging from 0.002 μm to 2 μm. Prior art magnetization film cannot render it anticipate the magnetic film suitable for embodying the invention composed mainly of iron oxide and having an appropriate residual magnetization ratio: $M_V/M_H$. Also no consideration has been taken into the dependence of good reproduction characteristic on the roughness of the substrate surface on which a magnetic film is to be formed. Under the circumstances, serious study by the inventors established that the surface of the substrate over which a magnetic layer is to be coated should be an appropriate roughness in the mean R range of 0.002 μm to 2 μm. Namely, if $R < 0.002$ μm, at which the surface is too smooth, a magnetic layer with exceedingly smooth surface will be formed , resulting in diminution of slideness and concomitant bad movability; occasionally involving the so-called "squeak". If $R > 2$ μm, so rough surface is produced that homogeneous magnetic layer can be formed only with difficulty. It also affects with rise in noise level, consequently decrease in S/N. Then exceeding roughness of the substrate surface causes the thickness of the magnetic layer to be ununiform, involving dispersion in magnetic characteristics, in particular coercive force (Hc) and residual magnetization ratio: $M_V/M_H$ described above. After all, any roughness out of the appropriate range is unsuitable for perpendicular magnetization.

If $R \leqq 0.2$ μm, appropriately smoothed magnetic layer surface is attainable. Generally, with magnetic tape for recording/reproduction of video signals or magnetic disk for perpendicular magnetic recording, high density recording can be made at recording wavelengths not more than 1 µm. For the use like these, the surface of the magnetic recording medium should have a roughness of not exceeding 0.1 µm in order to be a little loss of spacing. Thus if mean surface roughness of the substrate is set to not more than 0.2 µm, the magnetic layer surface of thickness not exceeding 0.1 µm suitable for use in perpendicular recording at an adequately high density will be obtained.

In further preferred embodiment of the invention, especially residual magnetization ratio: $M_V/M_H$ may be not less than 1.0 and coercive force (Hc) may be in the range of from 100 to 5000 Oe. If residual magnetization ratio $M_V/M_H$ is not less than 1.0, the iron oxide magnetic material is formed for its magnetic moment to be inclined up at 45° or more to the plane towards the perpendicular, and constructed to be adequately subjected to perpendicular magnetization. If the magnetic layer has coercive force in the range between 100 and 5000 Oe, its magnetic characteristic can be adequate for perpendicular magnetizable film. Hc smaller than 100 Oe causes the memory to disappear through the influence of external magnetic field whereas Hc exceeding 5000 Oe may be disadvantage for practical recording process becauses of too great electric current consumption through the head. In the abovementioned Hc range, preferably of 300 to 3000 Oe, adquate recording characteristics can be achieved.

According to a further preferred feature of the invention, the magnetic layer may be provided thereon with an wear-proof and well smooth protective coating, which contributes to effective prevention from the magnetic layer surface from wearing resulting from the high speed sliding of the magnetic head on the surface while the medium is functioning, and from the involving fall in S/N ratio respective to reproduction output. That is to say, the protective coating is advantageous in the respect that the good wear-proofness is effective to prevent the magnetic layer surface of the medium from suffering damage and besides the good slidability can cause minimized damage of the opposed surface of the head and improvement in degradation proofness of the medium.

Materials suitable for constructing the above-described protective coating are inorganic elements such as Li, Be, C, Na, Mg, Al, Si, P, Ca, Sc, Ti, V, Cr, Mn, Fe, Co, Ni, Cu, Zn, Ga, Ge, Se, Rb, Y, Zr, Nb, Mo, Ru, Rh, Pd, Ag, Cd, In, Sn, Te, Ba, Cs, Hf, Ta, W, Re, Os, Ir, Pt, Au, etc., their compounds, such as oxides, nitrides, and combination of these. Out of these, $Al_2O_3$, SiC, TiC and the likes are preferred in particular when used in the form of ceramic. Likewise oxides are stable and advantageous. It however can be stated magnetism exhibiting materials are unfavorable because they affects inversely on the magnetic characteristics.

Other materials suitable for use in forming the protective coating are exemplified as follows: organic compounds such as silicone oil, carbon black graft polymers, monocarboxylic fatty acids having 12 to 16 carbon atoms, esters of fatty acids and monovalent alcohols having 12 to 16 carbon atoms, etc.; and high molecular compounds such as copolymer of vinyl chloride and vinyl acetate, copolymer of vinyl chloride and vinylidene chloride, copolymer of vinyl chloride and acrylonitrile, copolymer of acrylic ester and acrylonitrile, phenol resin, polyurethan-hardened resin, urea resin, melamine resin, alkid resin, silicone resin , acrylic reaction resin, high molecular weight polyester resin, a mixture of high molecular polyester resin and isocyanate prepolymer, a mixture of methacrylate copolymer and diisocyanate prepolymer, fluorine polymers such as Teflon, electron irradiation hardened unsaturated prepolymer such as of anhydrous maleic acid, urethan acryl, polyester acryl, polyether acryl, polyurethanacryl, polyamidoacryl, etc. Suitable thickness of the protective coating is in the range of 100 Å to 5 μm, preferably 200 Å to 3 μm. More than 5 μm of thickness tends to cause reduction in output, and can bring deterioration in electromagnetic transduction characteristic, whereas less than 100 Å of thickness is too small to obtain enough effects. Inorganic coatings can be formed by vacuum evaporation coating, sputtering, plating methods, etc., and organic protective coatings by immersing, reverse roll coating, curtain coating, gravure coating, nozzle coating, electron beam polymerization, plasma polymerization methods, etc. In addition, organic protective coating may be formed by the procedure comprising dissolving an organic compound in a suitable solvent and then applying the solution to the thickness of 1 to 10 µm, followed by evaporating off the solvent and drying with heated wind to make a desired thickness of film.

Any substance to which a concerned magnetic material can be adhesive is suitable for use in preparing the substrate of the magnetic recording medium. Typical examples are plastics such as polyethylene terephthalate, polyvinyl chloride, cellulose triacetate, polycarbonate, polyimide, polyamide and polymethylmethacrylate; ceramics including glass and metals. The substrate may be used in the form of sheet, card, disk, drum or long tape.

The magnetic recording medium according to the invention can be prepared as follows: With a substrate attached closely to a fixed plate or moving, a magnetic material is deposited over the substrate. For accomplishing this, in a vacuum processing chamber to which an evacuation system comprising a vacuum pump is connected, sputtering method in which targets of magnetic material are sputtered or vacuum evaporation coating method in which magnetic material is evaporated from its source and then depositted on the substrate is applicable. In any case, element to be constituent of the magnetic layer is caused to fly and is depositted onto the substrate to form continuous thin film on it.

The magnetic recording medium and process of manufacturing the same embodying the invention are described more fully with reference to the accompnying drawings hereinafter:

The magnetic material is formed on a substrate by means of vacuum evaporation coating technique including electric field evaporation coating and ion plating techniques, sputtering method, and others consisting of flying atoms to be constituents of the magnetic layer. Especially the use of an opposed-targets sputtering apparatus is preferred.

Fig. 1 shows an opposed targets sputtering apparatus. In Fig. 1, reference characters designate as follows: 1 vacuum chamber, 2 evacuation system comprising a vacuum pump for evacuating the vacuum chamber, and 3 gas introducing system for introducing a specified gas in the chamber 1 to gas pressure of the region between $10^{-1}$ and $10^{-4}$ Torr. There is provided a pair of targets $T_1$ and $T_2$ disposed opposite and parallel to each other, each attached to a target holder 4. Materials suitable for the targets are such as Fe, $Fe_3O_4$, $\gamma$-$Fe_2O_3$, Berthollide compounds having intermediate compositions between $Fe_3O_4$ and $\gamma$-$Fe_2O_3$. The targets $T_1$, $T_2$ work

as electrodes, and a magnetic field is established between them by the action of permanent magnets. There is provided a substrate 6 of a magnetic film to be prepared. It is secured to a substrate holder 5 to be positioned vertically to and on the side of the opposed targets.

In the targets sputtering apparatus of the above-described construction, magnetic field is established between and perpendicularly to both targets $T_1$, $T_2$ disposed parallel and opositely to each other. Sputter gas ions are accerelated in electric field in the cathode drop area, (namely, the atmosphere of plasma generated between the targets $T_1$, $T_2$ and the between the targets $T_1$, $T_2$), and bomberds against the surfaces of the targets. The thus-released $\gamma$-electrons are enclosed in the space between the targets under the action of the magnetic field and therein moved towards either opposed target. Upon they reaching the surface of either target, they are reflected at the cathode drop area near the target. In this way, $\gamma$- electrons repeats the reciprocating movement in the enclosure of magnetic field. During the repeated reciprocations, they collide with neutral atmospheric gas to decompose the latter into ions and electrons. The products promotes the release of $\gamma$-electrons from the targets and ionization of atmosphere gas. Consequently high density plasma is generated in the space between the targets $T_1$, $T_2$. As the result, target substances are sputtered as a magnetic layer or film on the substrate 6. Compared with other deposition methods, the opposed targets sputtering apparatus is advantageous for preparing a perpendicular magnetization film in respects that it permits rapid film coating by high speed sputtering without needing direct exposure to the plasma, and at low substrate temperature. It has additional advantages compared with the prior art sputtering apparatus that target substances are sputtered on the substrate with small incidence energy and hence simply guided to be deposited in desired direction. It therefore permits ready forming of a film having a structure appropriate for perpendicular magnetization recording.

The preparation of the magnetic record medium with the above-mentioned sputtering apparatus is described under by way of an example:

The conditions for the preparation were as follows:

Target material: Iron (containing Co at 1 atomic %) Substrate: Glass

Distance between targets: 100 mm

Magnetic field of the sputtering space: 140 Oe

Shape of target: Disk of 100 mm in diameter and 5 mm thick Spacing between substrate and target end: 30 mm

Back pressure in vacuum chamber: $10^{-6}$ Torr

Pressure of introduced gas: $4 \times 10^{-3}$ Torr ($Ar+O_2$)

Sputtering input power: 420 W

Thus, a magnetic recording medium consisting of a base film 6 and an iron oxide magnetic layer 10 on it, as shown in Fig. 2, was obtained. The midium was used for assessment of the characteristics of the formed magnetic layer. The assessment was made on the basis of the determination of composition by X-ray microanalysis (XMA), state of iron oxide by X-ray diffraction, and magnetic characteristics with a vibrating sample magnetometer. The yielded results of characteristics of the magnetic recording medium were as follows:

As represented in Fig. 3, $M_V/M_H$ was 0.5 or more. Of the coercive force, the perpendicular and in-plane components $H_V$ and $H_H$ were 920 and 750 Oe, respectively. In Fig. 3, the ordinate expresses magnetization in gauss and the abscissa strength of applied magnetic field in KOe. The plotted curves a and b indicate in-plane and perpendicular magnetic characteristics, respectively. The composition pattern determined with a XMA, [X-556] KEVEX-7000 model (Hitachi, Japan) has a main peak of Fe and shows a small content of Co. The results obtained with a X-ray diffractometer, Model:JDX-10RA (Nippon Electron, Japan) are given in Table 1, showing that the principal constituent is iron oxide. The observation with an electron microscope revealed that the magnetic film has orderly perpendicularly-arrayed structure to the film plane. In this way, the fact to be surprised was demonstrated that a continuous thin film magnetic recording medium composed mainly of iron oxides and with not less than 0.5 of $M_V/M_H$ can be prepared.

Table 1

| Reflection angle 2θ (deg.) | Miller dices | | Observed reflectivity (%) |
|---|---|---|---|
| | $Fe_3O_4$ | $\gamma$-$Fe_2O_3$ | |
| 17.9 | (111) | | 64 |
| 21.8 | | (200), (006) | 100 |
| 25.6 | | (204) | 59 |
| 31.3 | | (222) | 44 |
| 35.3 | (311) | | 53 |
| 37.2 | | (226) | 35 |
| 42.7 | (400) | | 53 |

Before film forming by the above-mentioned sputtering process, the surface of the substrate should be subjected to claiming treatment by bomberdment of $Ar^+$ in the same sputtering apparatus, baking, or high frequency treatment.

Under the same conditions as mentioned above except the sputtering input of 120 W, as apparent from Fig. 4, inplane hysteresis loop is smaller than perpendicular hysteresis loop, and shows $M_V \gtrsim 0.5\ M_H$, consequently $M_V/M_H \cong 2.0$, and Hc≅1000 Oe. This demonstrates that the formed magnetic layer is more appropriate for perpendicular magnetization.

The under-given Table 2 makes it apparent that the magnetic layer is composed mainly of iron oxides of spinel crystal structure. Besides, in this magnetic layer, orderly-arrayed and perpendicularly-positioned structure to the in-pain direction was observed with an electron microscope.

Table 2

| Reflection angle 2θ (Degree) | Miller dices | | Observed Reflectivity (%) |
|---|---|---|---|
| | $Fe_3O_4$ | $\gamma$-$Fe_2O_3$ | |
| 17.8 | (111) | | 70 |
| 21.5 | | (200), (006) | 100 |
| 25.4 | | (204) | 40 |
| 31.1 | | (222) | 30 |
| 35.3 | (311) | | 53 |
| 37.0 | (222) | | 40 |
| 42.7 | (400) | | 20 |

Further study on the above-mentioned magnetic layer pointed out it to be much important that magnetizable axis of the constituents, iron oxides, especially $Fe_3O_4$, is inclined up in relation to the plane, more particularly with the [111] component of the crystal axis oriented perpendicularly to the plane, from the following data:

Of the magnetic layer formed at gas pressures ranging $10^{-1}$ to $10^{-4}$ Torr, the composition and orientation were assessed with a X-ray diffractometer, Model: JDX-10RA (Nippon Electron Co., Ltd., Japan), and a convex curve plotting the reflection against sputtering gas pressure, and having reflection peak of $Fe_3O_4$ and $\gamma$-$Fe_2O_3$, as shown in Fig. 5, was obtained. It follows that the reflection peaks at [111] face and higher order faces of $Fe_3O_4$ are larger at gas (Ar + $O_2$) pressures ranging from $10^{-1}$ to $10^{-4}$ Torr, prferably $10^{-2}$ to $10^{-3}$ Torr. Thus such structure can be achieved that $Fe_3O_4$ is substantially orientated in the direction of [111].

Fig. 6 representing the dependence of perpendicularly-magnetizable orientation ($M_V/M_H$) on reflectivity ratio represented on the ordinate in Fig. 5 shows that if reflectivity ratio, taking the maximum value on [111] face as 100 %, is about 20 % or more, $M_V/V_H \geqq 0.5$, which indicates that a magnetic layer capable of being perpendiculaly magnetized is formed. Accordingly, as Fig. 5 indicates, the gas pressure is favorable to be $10^{-1}$ Torr or below for obtaining not less than about 20 % of reflectivity.

From the above-described, perpendicularly magnetizable magnetic layer can be formed by sputtering preferably at $10^{-4}$ to $10^{-1}$ Torr of mixed gas (Ar + $O_2$) pressure. Gas pressure should be limited down to $10^{-4}$ Torr because the plasma get unstable at below the value. Higher gas pressure than $10^{-1}$ Torr results in so smaller reflectivity ratio that the requirement for perpendicular magnetization orientation:

$M_V/M_H \geq 0.5$ cannot be fullfilled.

Combination ratio of both components in the Ar plus $O_2$ mixed gas is important, too. As shown in Fig. 7, with varying partial pressure ratio of $O_2$ to Ar, $M_V/M_H$ changes. It is noteworthy that $M_V/M_H$ is not exceed 0.5 at partial pressure ratios of not more than 2 %. On the contrary, too high partial pressure ratio over 90 % causes electric discharge to be unstable, thus recommended partial pressure ratio being 2 to 90 %, preferably 10 to 80 %.

Additionally, gases suitable for use in sputtering are such as Kr, Ne and He as well as Ar. They can be introduced alone only in the case of iron oxide targets, or in combination with such $O_2$, $N_2$ or $H_2O$ as above-mentioned.

Preliminary evacuation prior to sputtering, down to not more than $5 \times 10^{-5}$ Torr may be advantageous.

For comparison, a magnetic film of $\alpha$-$Fe_2O_3$ was prepared in the aforesaid sputtering apparatus, and tested. The obtained X-ray diffraction data, which is summarized in Table 3, indicated the structure to be rhombohedral system.

In the sputtering apparatus, a mgnetic layer composed spinel type $\gamma$-$Fe_2O_3$, could be formed in the same way as of $Fe_3O_4$. The lattice constant of $\gamma$-$Fe_2O_3$ was 8.34 Å.

Under the aforesaid sputtering conditions, Ar alone was introduced, and a Fe compound magnetic layer was formed which had a magnetic characteristic represented by the graph in

Table 3

| Reflection angle 2θ (degree) | Miller indices $\alpha$-$Fe_2O_3$ | Observed reflectivity (%) |
|---|---|---|
| 33.3 | (104) | 40 |
| 35.7 | (110) | 100 |
| 41.0 | (113) 30* | 20 |
| 49.5 | (024) 40* | 30 |
| 54.2 | (116) 60* | 20 |
| 62.5 | (214) 35* | 30 |
| 64.1 | (300) 35* | 30 |

* Reflectivity according to ASTM

Fig. 8. $M_H \gg M_V$, namely $M_V/M_H=0.09$, is seen, and hence the layer was proved totally inadequate for perpendicular magnetization. It also was confirmed from the data of X-ray diffraction given in Table 4 to be a Fe compound film of cubic lattice (lattice constant: 2.87 Å ).

Table 4

| Reflection Angle 2θ (degree) | Miller indices Fe | Observed reflectivity (%) |
|---|---|---|
| 44.5 | (100) | 80 |
| 65.1 | (200) | 50 |
| 82.2 | (211) | 35 |

The magnetic layer was observed for its structure to vary with thickness, as follows: too thin thickness t of it, not exceeding 100 Å was associated with a tendency towards the formation of a row of island-shaped particles 11 on the substrate 6 as illustrated in Fig. 9a. It therefore is probable inadequate for forming of perpendicularly-magnetizable film. Lattice constants of various iron oxides are listed under:

| | Lattice constant a (Å) | |
|---|---|---|
| $Fe_3O_4$ | 8.390 | (From AST Card 7-322 ) |
| $\gamma$-$Fe_2O_3$ | 8.350 | (From AST Card 4-0755) |
| $\alpha$-$Fe_2O_3$ | 5.43 | (From AST Card 6-0502) |
| $CoO \cdot Fe_2O_3$ | 8.33 | (From AST Card 3-0864) |

The data leads to the inference that in the iron oxide layer, the thickness of not more than 100 Å corresponds to a lattice structure of as small as about 12 or less layers, hence resulting in such a discrete structure of film. On the other hand, at the thickness above 100 Å or below 5 µm was obseved a continuous film appropriate for perpendicular magnetization where an dense array of columnar particles 12 of iron oxide upright standing, or with magnetizable axes perpendicularly-orientated are found on the substrate 6, as illustrated in Fig. 9b, because probably in the adequate region of thickness, orientated particles of magnetic material can be deposited in regular layered structure.

On the other hand, too large thickness of the magnetic layer involves fatal defects: At not less than 5 μm in thickness, particles 13 randomly orientated, namely with their magnetizable axes greatly deflected to the vertical axis, are diposited on the fundamental orderly-layered columner particle 12 array, as illustrated in Fig. 9c. The cause for this is seemed in the respect that particles deposited after exceeding a certain thickness has a tendency to diffuse in the in-plane of the layer, resulting in a disorderly layered crystal lattice. In this way, it is difficult for the magnetic layer to be formed to have perpendicularly magnetizable axis.

Magnetic recording media with iron oxide magnetic layer of varying thicknesses t were prepared, and measured with a vibrating sample magnetometer, Model: VSM-3S (Toha Industry Co., Ltd., Japan). The characteristic curve shown in Fig. 10 was obtained. Measurement of film thickness was made on a needle type film thickness gauge (Cristep, Rankteller Hobson Co.). Owing to insufficient sensitibity of the magnetometer, thin (about 100 Å) film unmeasurable individually were determined from the measurement of a pile of about 10 sheets of film. As apparent from Fig. 10, the perpendicular magnetization characteristic $M_V/M_H$ of the magnetic recording medium depends on the thickness t of the magnetic film. In particular, it may be less than 0.5 at extreme thicknesses below $10^{-2}$ μm (100 Å) and over 5 μm corresponds to not less than 0.5 of $M_V/M_H$, especially those ranging 200 Å to 4 μm to not less than 1.0 of $M_V/M_H$. These ensures the use as perpendicularly-magnetizable film. In view of that as the graph indicates, the characteristic stays at maximum value in the thickness t range between 1000 Å and 1 μm, magnetic films of eccelent perpendicular magnetization characteristic could be formed by setting to such thicknesses.

The magnetic layer was observed with an electron microscope to be of a substantially orderly-arrayed structure. For example, as shown in Fig. 11, the magnetic layer 10 is structually a dense array of columner or needle-like structure particle, each with boundary and made mainly from iron oxides standing substantially upright on the substrate 6. The shorter diameter of the particle 12 is 100 to 200 Å. A continuous magnetic layer 10 having an uniform thickness of 2500 Å was found.

The magnetic layer exhibits desired or excellent perpendicular magnetization characteristic plotting hysterisis loop in Fig. 3, because it consists of columnar or needle-like particles, each being substantially perpendicular so as to be perpendicularly magntizable without difficulty. On the contrary, it has been demonstrated that the particles having unobvious boundary or of excessive large size were associated with too increased in-pain magnetization, resulting in such relative reduction to $M_V$ as correspondent to $M_V/M_H < 0.5$. These indicates there is no successfulness in desired perpendicular magnetization.

Under the above-mentioned sputtering conditions and at 100 Oe of magnetic field in the sputtering, magnetic layer was formed, and the data listed in Table 5 was yielded:

Table 5

| Reflection angle 2θ (degree) | Miller indices | | Observed reflectivity (%) |
|---|---|---|---|
| | $Fe_3O_4$ | $\gamma$-$Fe_2O_3$ | |
| 17.9 | (111) | | 64 |
| 21.8 | | (200), (006) | 100 |
| 25.6 | | (204) | 59 |
| 31.3 | | (222) | 44 |
| 35.3 | (311) | | 53 |
| 37.2 | | (226) | 35 |
| 42.7 | (400) | | 53 |

It also has been comfirmed that the magnetic layer, as schematically shown in Fig. 12 to an enlarged scale, of a continuous thin film consisting of a lot of particles 12 made from iron oxides should be in the range of the aforesaid bulk factor x, namely density ratio to a crystal having the same composition: it also was experimentally verified that, as plotted in Fig. 13, the coercive force is stayed high in bulk

factor range of $\leq 0.95$ and sharply falls upon exceeding 0.95. The cause for this is seemed that under the condition of $x > 0.95$, that is bulk factor is too great, the magnetic layer is bulky and approximate structurally to the crystal of the same composition, namely single crystal.

At bulk factors $x \geq 0.60$, such as 0.6 or 0.8, is obtained adequately high reproduction voltages are plotted likewise in the range of higher recording density as shown in Fig. 14, thus good output being obtained under this condition. On the other hand, reproduction output, as apparent from the graph, is smaller at $x < 0.60$ and remarkably smaller at $x = 0.5$, and thus may be inadequate for high density recording. This is thought to be that the excessive small density at $x < 0.60$ arrests the development of the particles, which is associated with the tendency towards poor residual magnetization, whereas at $x \geq 0.60$, the particles is allowed to grow fully to form a film with an adequate density and structure, and consequently great residual magnetization characteristic.

According to a further feature of the invention, as Fig. 15 shows, a magnetic layer 10 magnetizable perpendicularly to the in-plane can be covered with a protective coating 14 thereon. Comparative tests for movability and durability were performed between magnetic recording media with various protective coatings 14 over the magnetic layer 10 and those either without any protective coating and hence with the magnetic layer 10 or Co-Cr perpendicularly-magnetizable film having the surface exposed. Test for movability made according to the procedure: a disk-shaped magnetic recording medium is caused to run 500 times under the contact with a magnetic head. The thus-induced reduction in reproduction output was measured. The procedure of durability test comprises 100 times running with a head, weighing 150 g, followed by check for defects of the surface of the medium, in particular detachment of the magnetizable film by microscopy. The yielded results are summarized in Table 6.

Table 6

| Sample | Perpendicularly magnetizable film | Protective coating | Reduction rate in reprocuction (%) | Durability test (check for detachment) |
|---|---|---|---|---|
| 1 | Iron oxides | Cr | 8 | No |
| 2 | Iron oxides | Mo | 9 | No |
| 3 | Iron oxides | W | 9 | No |
| 4 | Iron oxides | $Al_2O_3$ | 5 | No |
| 5 | Iron oxides | $SiO_2$ | 5 | No |
| 6 | Iron oxides | Silicone oil | 8 | No |
| 7 | Iron oxides | Carbon black graft polymer | 8 | No |
| 8 | Iron oxides | SiC | 5 | No |
| 9 | Iron oxides | TiC | 5 | No |
| 10 | Iron Oxides | No | 10 | Mild |
| 11 | Co-Cr | No | 25 | Moderate |

These results suggests the following: such protective coating provided on the magnetic layer contributes to marked improvement in reproduction output and durability. Without any protective coating iron oxide magnetic film is preferred to Co-Cr magnetic film. Protective coating causes improvement in the characteristics, too. Out of the above-listed materials of the protective coating, ceramics such as $Al_2O_3$, $SiO_2$, SiC and TiC are superior. Oxides has higher chemical stability. In addition, the protective coating takes effect of preventing the surface of the medium from static charge, when it contains carbon black.

The magnetic recording medium, which has a magnetic layer made mainly from iron oxide, is markedly superior in chemical and mechanical stability to the prior art Co-Cr magnetic layer. Fig. 16 shows the result of the forced deterioration experiments (80°C, relative humidity: 85%): curves a and b of residual magnetic flux density (Br) against time, for the medium with iron oxide magnetic layer according to the invention and for the medium with Co-Cr magnetic layer, respectively. Measurement was carried out with a vibrating sample magnetometer (Tohei Industry Co., Ltd., Japan). ΔBr represents variance in residual magnetic flux density. The graph indicates that iron oxide magnetic layer undergoes much smaller deterioration in Br than Co-Cr magnetic layer. Somewhat drop in ΔBr/Br for iron oxide magnetic layer is seemed to be due to conversion of a part of $Fe_3O_4$, main constituent

of the film, into $\gamma$-$Fe_2O_3$. On the 30th day, spots, clouds and rust were observed on the surface of the Co-Cr magnetic layer whereas the surface of the iron oxide magnetic layer was not changed at all.

Magnetic recording medium were prepared according to the above-described process by the use of polyimide films with varying surface roughnesses. On any of these substrates, $Fe_3O_4$ film of 1000 Oe in coercive force (Hc) and 2000 Å thick was formed. Each obtained mgnetic medium of magnetic tape was set on cassette deck to carry out recording and reproduction. Conditions for testing were room temperature and relative humidity 65 %.

Fig. 17 is a graph showing the obtained results. The curve points out the following: The roughness of the substrate affects tape squeak incidence with sharp reduction as the former increases exceeding 0.002 µm, especially bejond 0.2 µm. Thus more than 0.2 µm of substrate roughness is preferred for good tape movability. Excessively large surface roughness cannot be accept: it has been demonstrated that those exceeding 2 µm are associated with uniform magnetic layer, involving defects of dispersed Hc and $M_V/M_H$, and decreased S/N. In view of these, upper limit should be set to 2 µm.

In the range of surface roughness according to the invention, the substrate is provided on the surface with sufficient projections and pits. Initially, particles are deposited in the pits to form the base layer or foundation on which successive particles are regularly deposited in the orientated way, preferably perpendicularly to the surface of the substrate. Thus a desired magnetic layer composed of columnar particles magnetizable perpendicularly develops advantageously to substantially uniform thickness throughout.

Magnetic recording media of the type above-described were prepared by the use of disks with varying surface roughness of substrates 6. On any of the disks, a $Fe_3O_4$ film of 5000 Å thick and 1000 Oe in coercive force Hc was formed. Each of the obtained magnetic recording media of magnetic disks, was mounted in a known recording reproduction apparatus. Then recording and reproduction carried out with a ring head of 0.3 μm in effective head gap and 100 μm in track width. The yield results of the disks were shown in Fig. 18, as curves plotting reproduction voltage on the ordinate and recording density on the abscissa. For example, assuming that the surface roughness R is 0.3 μm, reproduction output varies with higher recording density, as shown by the broken line in Fig. 18, R of 0.15 or 0.2 μm, at which greatly improved reproduction voltage correspondents to high recording density as the dot and dash line and solid line indicates, is very advantageous for density recording. From the important of reproduction output, $R \leq 0.2$ μm is preferred. Additional observation was that the magnetic layer is essential to be formed under the incubation of the substrate at not more than 500°C: Formation of the magnetic layer was performed at varying temperature of the substrate, and the magnetic characteristic plot shown in Fig. 19 was obtained. It indicates that at substrate temperatures exceeding 500°C, owing to disorderly-orientated arrangement of crystalline particles made mainly from iron oxides, residual magnetization ratio is ≧ 0.5, namely does not reach the desired value. Besides, substrates of not heat-resistant or thermoplastic material frequently resulted in deformation. In contrast to this, good characteristic ($M_V/M_H \geqq 0.5$) of film was always obtained at not more than 500°C of substrate according to the invention. The incubation of the substrate at not more than 500°C is accomplishable by the utilization of radiant heat from a halogen lamp used as the heater 11. Means can be the disposition of a vessel containing water and ice in the vicinity of the substrate, a freezing mixture sodium chrolide and ice for cooling it at about -20°C and another freezing mixture of alcohol and dry ice for cooling it at about -70°C.

In addition, though not shown, when formed under the application of the specified voltage, preferably of not more than 1000 V, A.C. or D.C., to the substrate 6, the electric field due to the applied voltage acts as bias, to effectively attract particles released from the target to the substrate, reflecting improvements in rate of film formation and in orientation of film crystals. In stead of or in combination with the applied voltage, a magnetic field may be established to be applied to the substrate. Magnetic field orientated perpendicularly to the plane of the substrate affect the development of crystals with the magnetic anisotropy of the crystals on the substrate orientated in the direction of the magnetic field or in the above-mentioned perpendicular direction. Adequate magnetic layer for perpendicular magnetization therefore can be produced. Fig. 20 is a graph representing the the dependence of X-ray diffraction degrees in relation to [111] of $Fe_3O_4$ crystal in the magnetic layer on the applied magnetic field. It indicates the orientation of the crystal can be improved by the application of magnetic field. The diffraction degree remained approx. constant with applied magnetic field increasing bejond 600 Oe. Moreover it became apparent that at reflection peak value from [111] plane of 4000 counts/sec or below, magnetic layers of $M_V/M_H \geqq 0.5$ can be produced with difficulty.

The above-described sputtering process permits magnetic layer to be formed at by far higher speed than the formation of the prior art thin film type magnetic layer (and also non-galvanizing plated magnetic layer). The measured film

forming speed is such as 10 Å to 5 µm/min, preferably 2000 Å to 2 µm/min, concomitantly with good orientation of developing crystals reflecting orderd structure of columnar particles.

Further importance having been found for the formation of particularly magnetizable magnetic layer made from iron oxides by the sputtering process with a sputtering apparatus, is to maintain the targets electrodes $T_1$ and $T_2$ (See Fig. 1) at temperatures not less than Curie point. The description with repect to this will be given under:

So far known sputtering process is disadvantageous in low speed of magnetic film formation and in much difficulty to form perpendicularly-magnetizable film at low cost. The cause for this is that, owing to the use of magnetic material as targets, most of magnetic flux for enclosing electron pass through the inside of the targets, resulting in fail to enclose electrons and to increase sputtering speed. In contrast to this, maintenance of the targets during the period of sputtering at Curie temperature or above, for instance, not less than 769°C for Fe targets, according to the process of the invention enables the magnetic flux to leak out of the targets, thereby electrons can be enclosed in the space between the targets, resulting in improvement in sputtering speed, reflecting rapid formation of magnetic layer.

For the achievement of this, in the sputtering apparatus, there are provided heaters 11 on the inner side and near the targets $T_1$, $T_2$, such as a resistance-heating system, a halogen lamp, or a heating system of passing current through molten metal.

Fig. 21 shows change in actual magnetic film forming speed with varying target temperature. In the experiments, targets made mainly from Fe (Curie point Tc = 769°C) are used. It shows film forming speed change sharply upon exceeding Curie point. It follows that the maintenance of target at temperatures of not less than Curie temperature during the period of sputtering permits high speed formation of film whereas slow film formation results at maintenance temperatures of target of below Curie temperature. In this way, the targets should be preferred kept at not less than Curie point.

In place of the sputtering apparatus with the opposed-tatgets system, a planar magnetron sputtering apparatus may be used.

Further it has been proved essential to set the thickness of the targets $T_1$, $T_2$ (See Fig. 1) to not more than 14 mm for the formation of the iron oxide magnetic layer film by the sputtering method, as described under:

The prior art sputtering process of manufacturing recording media is disadvantageous in slow formation of film. The rise in temperature of substrate for accelerating the formation results in fail in forming high quality magnetic film. Another disadvantage is the restriction of use to heat-resistant substrate. It has become apparent that the defect can be effectively removed by the use of targets of 14 mm or less thick. The setting to thin target thicknesses like this can cause enough increase in leakage flux from the targets to effectively enclose electrons in the magnetic field high density plasma, reflecting rapid film formation at low power consumption, and hence with the effect to prevent the temperature of the substrate from rising.

In view of these, it is advantageous to use targets of less than 14 mm thick for forming films good characteristics at high speed, slight power consumption and low substrate temperature.

Fig. 22 shows dependence of residual magnetization ratio $M_V/M_H$ of magnetic layers formed by the use of iron oxide and Fe targets, respectively, on the thickness of the targets. During the period of sputtering, the magnetic field was established with permanent magnets proveded on the inner side. The Figure shows that suitable thickness of iron oxide target to be used is not more than 14 mm, preferably not more than 12 mm, and that of Fe targets not more than 12 mm, preferably not more than 10 mm. It is however is advantageous to set the thickness of the targets to 0.5 mm or above because otherwise or if it is too thin, they suffer reduction in mechanical strength and waste though $M_V/M_H$ is not affected.

A vacuum evaporation apparatus permitting more rapid film formation than the sputtering apparatus is illustrated in Fig. 23, referring to which, a bell jar 21 is a vacuum chamber to which a vacuum pump (not shown) is connected through an exhaust conduit 23 provided with a butterfly valve 22. In the bell jar 21, there are provided a substrate 6 or, if it is isolating, an electrode behind it , a heater 25 for heating the substrate 6 to be coated, and a D.C. power supply 26 for applying a negative D.C. bias voltage to the substrate 6. A Fe source 27 is found oppositely to the substrate 6, and gas discharge tube 28 is disposed with its gas outlet opposed to the substrate 6. The apparatus of this construction is operated to form magnetic film in the following procedure: After the bell jar 21 is evacuated to vacuum, the substrate 6 is heated with the heater 25 at desired temperature and concurrently negative D.C. voltage not more than -300 V applied to the substrate from the D.C. power source 26. Then oxygen gas 19 is supplied to an ion gun 28, and oxygen ions or active oxygen from there is introduced into the bell jar 21. While attracting to the substrate 6 under the D.C. negative bias, Fe source 27 is heated by the electron gun heating system (not shown) to evaporate Fe. As the result, thin iron oxide film containing oxygen is formed.

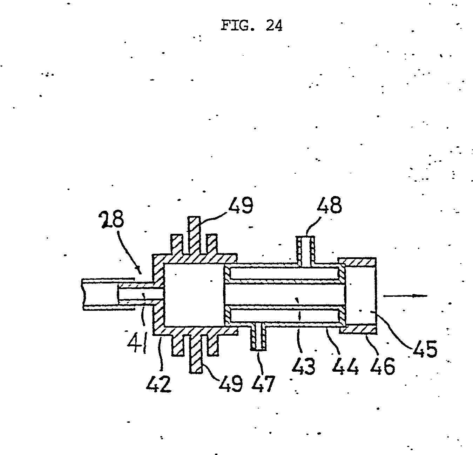

The above-mentioned gas discharged tube 28, which is illustrated in Fig. 24, comprises a discharge tube 44 of such as glass defining the discharge space 43, with at one end a cylindrical electrode member having a gas inlet and at the other end another ring-shaped electrode 46 having an outlet 45. When D.C. or A.C. charge is applied between the electrode 45, 46, a gas introduced through the inlet 41, such as oxygen gas, is excited into glow discharge in the space 43. Then produced activated or high electron energy level oxygen atoms or molecules, or oxygen ions are withdrawn through the outlet 45. The shown discharge tube 44 is of double-walled structure with the space between through which cooling water passes. Reference characters 47 and 48 designate water inlet and outlet, respectively. Another reference character 49 indicates a fin for cooling the electrode member 42. The spacing between the electrodes in the oxygen gas-discharge tube 28 may be 10 to 15 cm, applied voltage 600 V and pressure of the discharge space 63 about $10^{-2}$ Torr.

The above-described vacuum evaporation coating process is capable of forming perpendicular magnetizable film at high speed, but not more than 60 μm/min, and contributes to improvement in productivity.

The important feature of the above-described process resides in causing magnetic material to fly in the form of particles to form film. In stead of it can be used others sputtering processes as of D.C. or RF type, reactive type or magnetron type, or vacuum evaporation coating by resistance heating of the vapor source, or by ion beam or cluster ion beam.

It will be evident that various modifications can be made to the described embodiments without departing from the scope of the present invention.

WHAT IS CLAIMED IS:

1. A magnetic recording medium comprising a substrate and a magnetic layer thereon, the magnetic layer

(a) being a continuous magnetic layer made mainly from iron oxides, and

(b) having not less than 0.5 of ratio between perpendicular-to-plane residual magnetization and in-plane residual magnetization of said magnetic layer: $M_V/M_H$.

2. A magnetic recording medium as claimed in claim 1 wherein crystals of said iron oxides are arrayed for the specified axes thereof to be directed substantially perpendicularly to the plane of said magnetic layer.

3. A magnetic recording medium as claimed in claim 1 wherein a large number of particles made mainly from iron oxides and having the boundaries thereof placed in contact with each other so that a continuous magnetic layer is formed.

4. A magnetic recording medium as claimed in claim 1 wherein bulk factor ($x = d_1/d_2$), namely ratio between the density of said magnetic layer, $d_1$ ($g/cm^3$), and the density of the crystal with the same composition, $d_2$ ($g/cm^3$), meets the condition: $0.60 \leqq x \leqq 0.95$.

5. A magnetic recording medium as claimed in claim 1 wherein said magnetic layer has a uniform thickness of 100 Å to 5 μm.

6. A magnetic recording medium as claimed in claim 1 wherein said substrate coated with said magnetic layer thereon has mean surface roughness, R, meeting the condition: $0.002\ \mu m \leqq R \leqq 2\ \mu m$.

7. A magnetic recording medium as claimed in claim 1 wherein said residual magnetization ratio, $M_V/M_H$ of said magnetic layer is not less than 1.0, and the coercive force, Hc, thereof is in the range of 100 to 5000 Oe.

8. A magnetic recording medium as claimed in claim 1 wherein a protective coating with high wear-proof and good slideness is provided on said magnetic layer.

9. A process of manufacturing a magnetic recording medium comprising a substrate and a continuous magnetic layer made mainly from iron oxides formed thereon and having not less than 0.5 of ratio between perpendicular-to-plane residual magnetization, $M_V$, and in-plane residual magnetization, $M_H$, of magnetic layer: $M_V/M_H$, comprising causing particles to be component of said magnetic layer to fly and be deposited on said substrate, whereby said continuous magnetic layer is formed.

10. A process as claimed in claim 9 wherein, for the formation of said magnetic layer, a specified gas is used while supplied to be a gas pressure of 1 x $10^{-4}$ to $10^{-1}$ Torr.

11. A process as claimed in claim 9 wherein the temperature of said substrate is kept not more than 500°C.

12. A process as claimed in claim 9 wherein said magnetic layer is formed on said substrate according to the sputtering process, with targets made from magnetic material to be the component of the magnetic layer, while the targets are maintained at not less than Curie point of the magnetic material.

13. A process as claimed in claim 9 wherein said magnetic layer is formed on said substrate according to the sputtering process with targets made from material to be the component of the magnetic layer and of not more than 14 mm thick.

FIG. 1

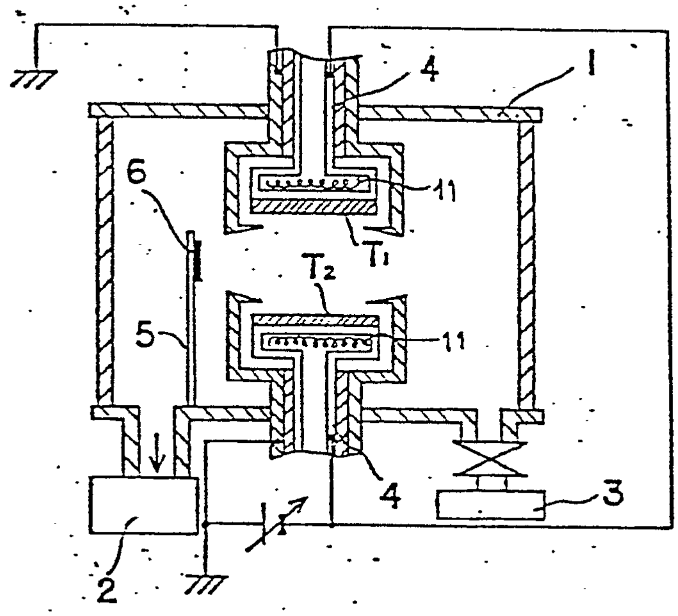


FIG. 2

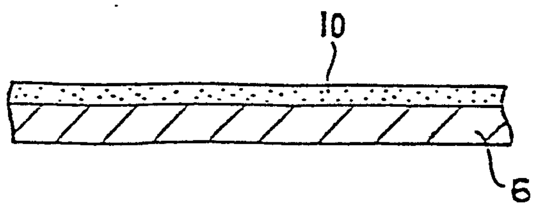

FIG. 3

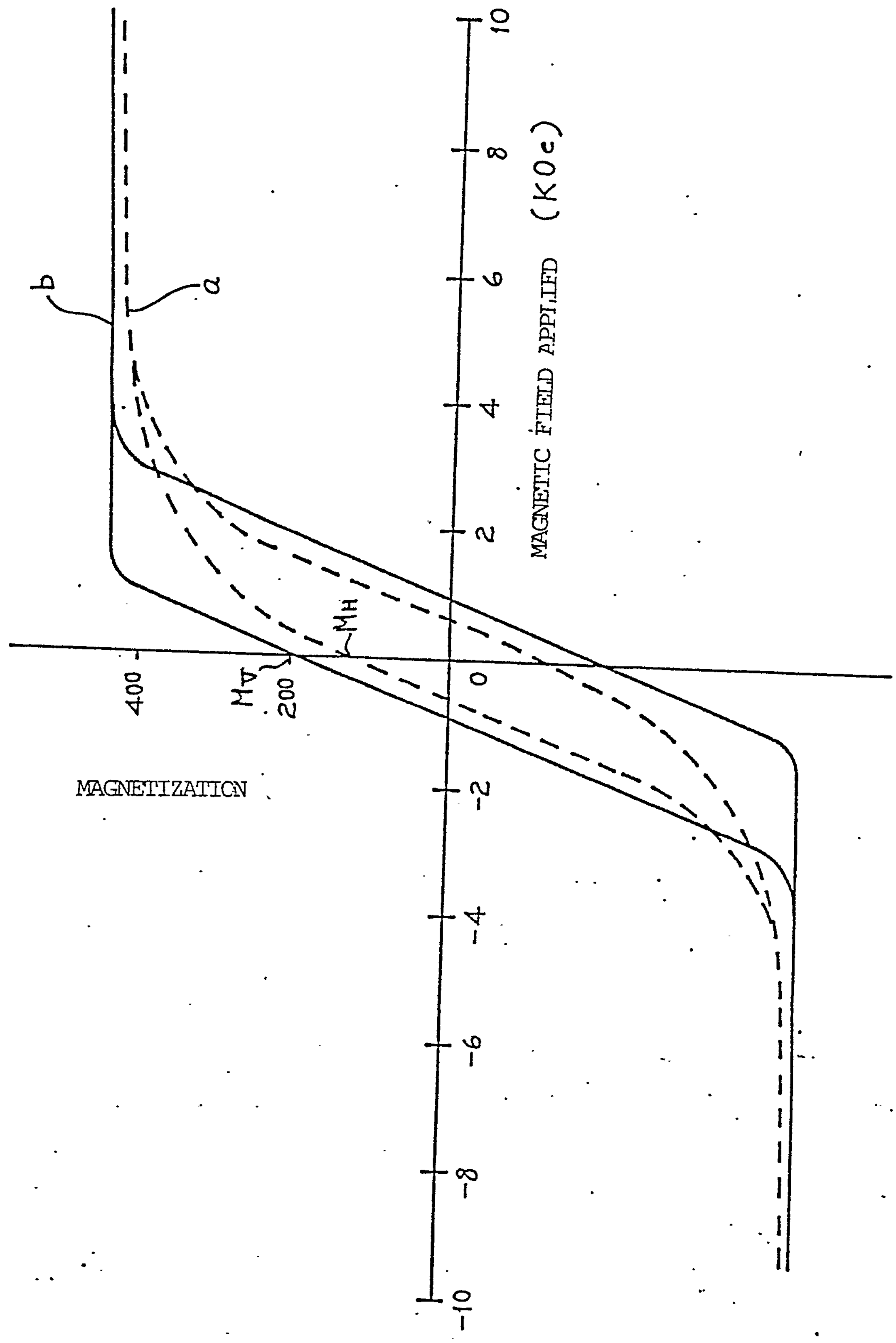
MAGNETIZATION
MAGNETIC FIELD APPLIED (KOe)
400
200
0
Mv
MH
a
b
10
8
6
4
2
-2
-4
-6
-8
-10

FIG. 4

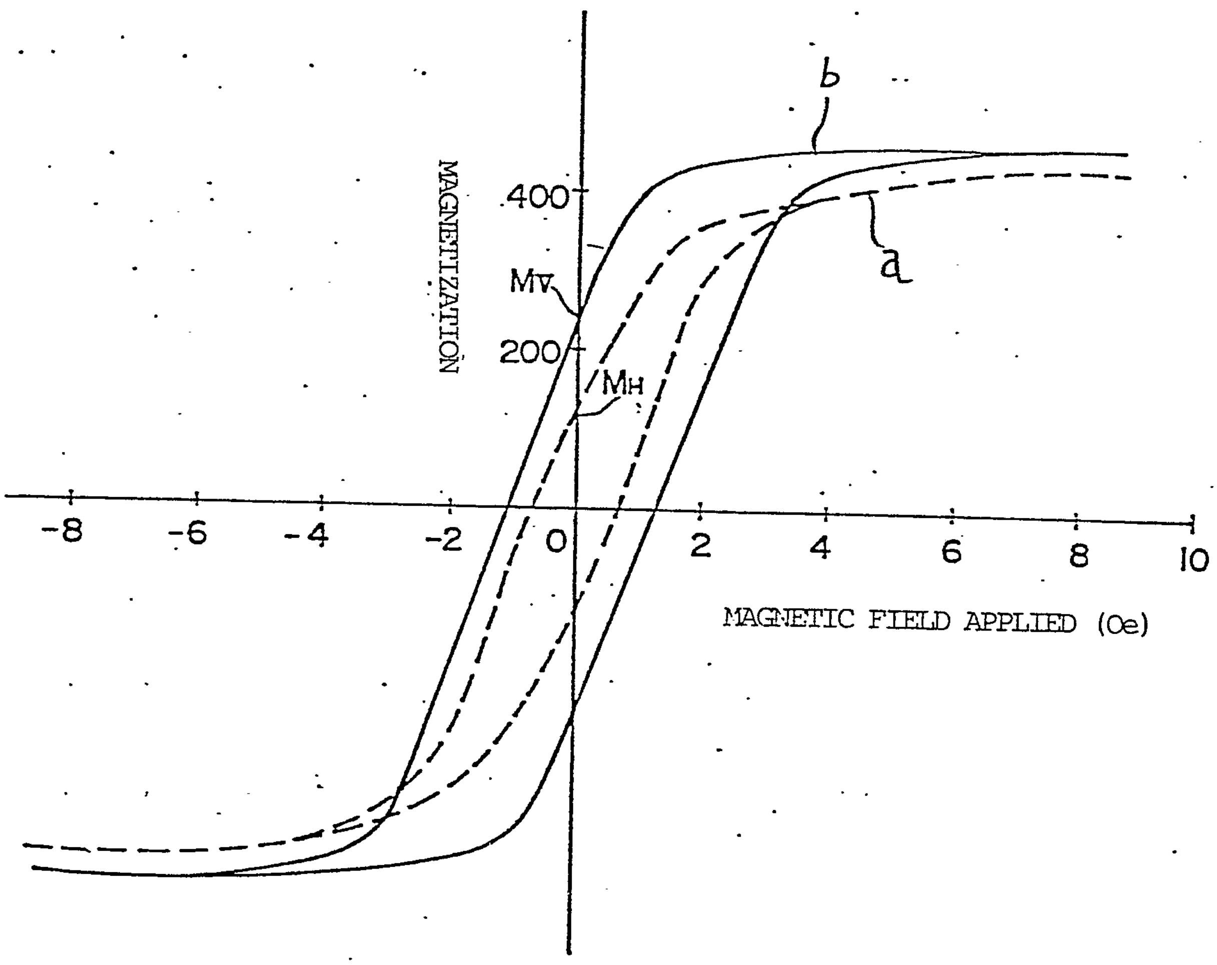
MAGNETIZATION
400
200
Mv
MH
b
a
-8
-6
-4
-2
0
2
4
6
8
10
MAGNETIC FIELD APPLIED (Oe)

FIG. 5

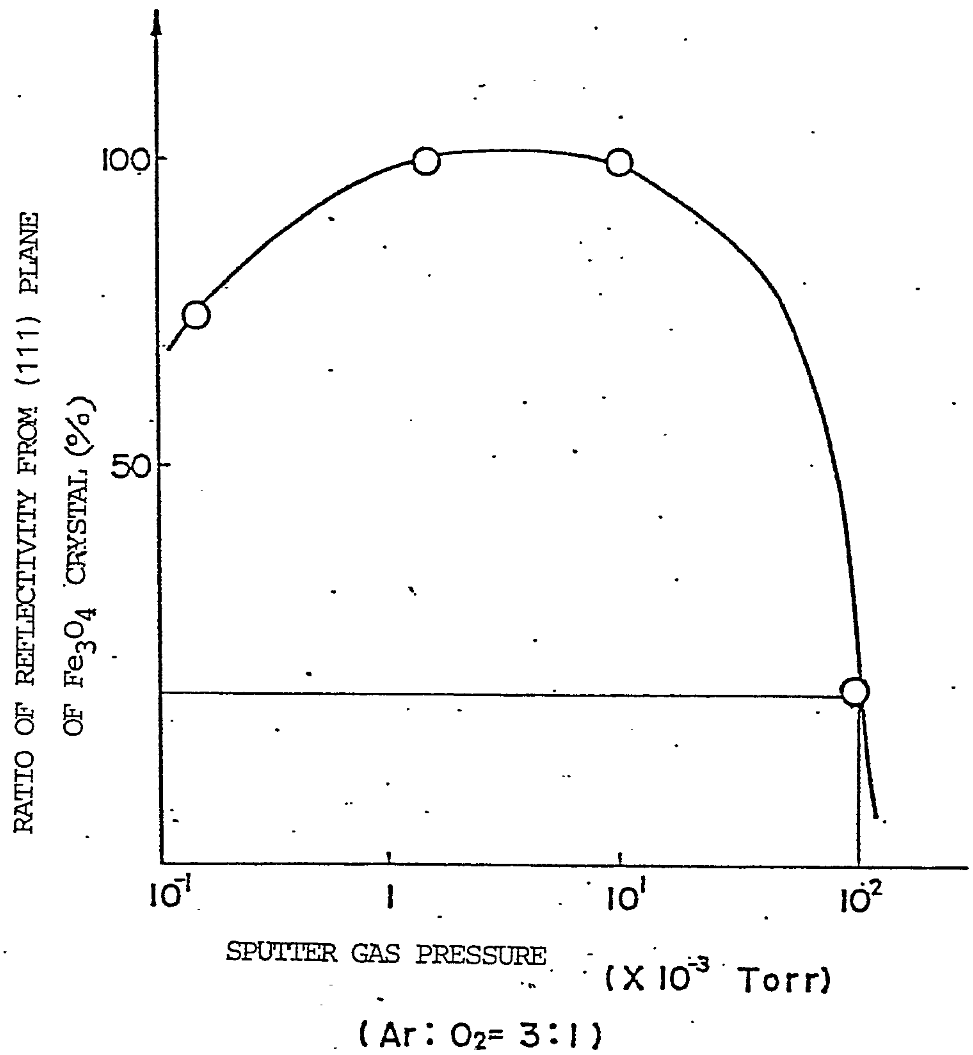
RATIO OF REFLECTIVITY FROM (111) PLANE
OF $Fe_3O_4$ CRYSTAL (%)
100
50
$10^{-1}$
1
$10^{1}$
$10^{2}$
SPUTTER GAS PRESSURE (X $10^{-3}$ Torr)
(Ar : $O_2$ = 3 : 1)

FIG. 6

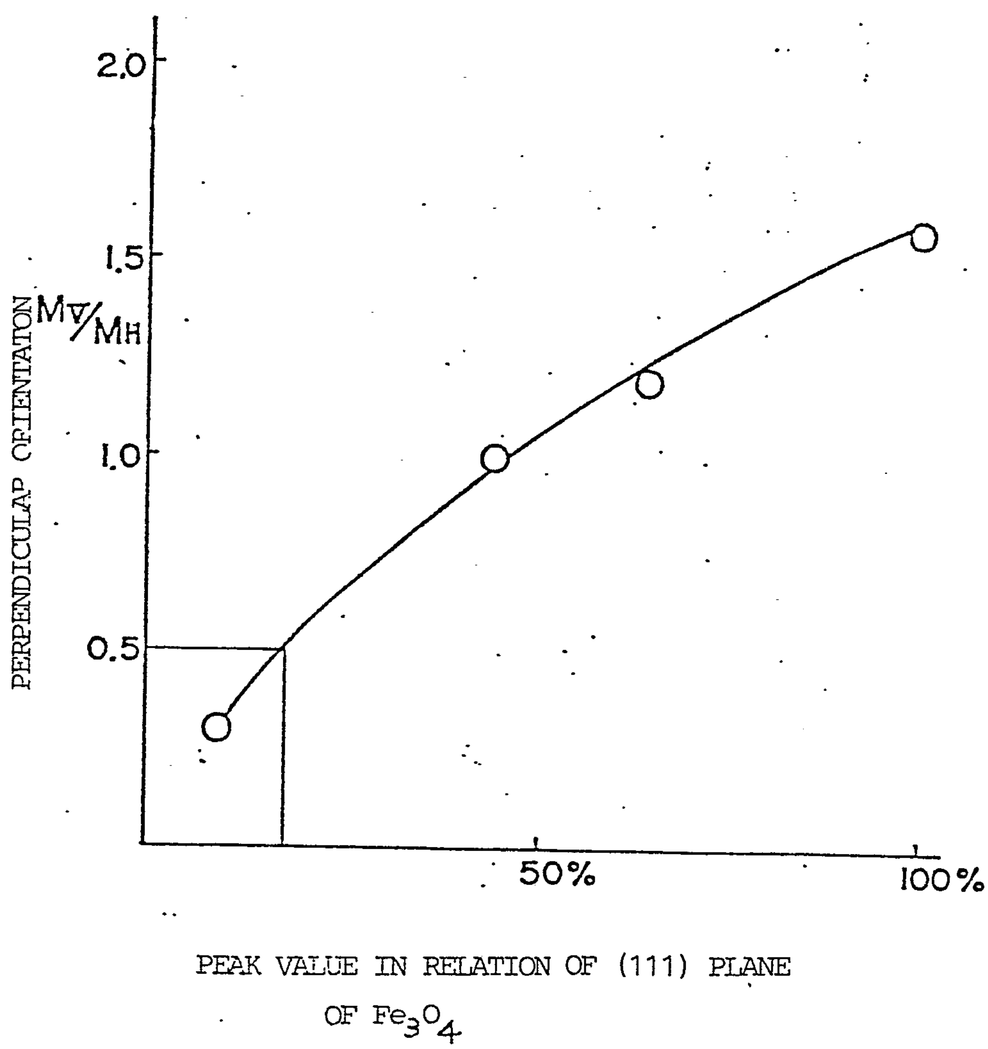

2.0
1.5
1.0
0.5
PERPENDICULAP ORIENTATON Mv/MH
50%
100%
PEAK VALUE IN RELATION OF (111) PLANE OF $Fe_3O_4$

FIG. 7

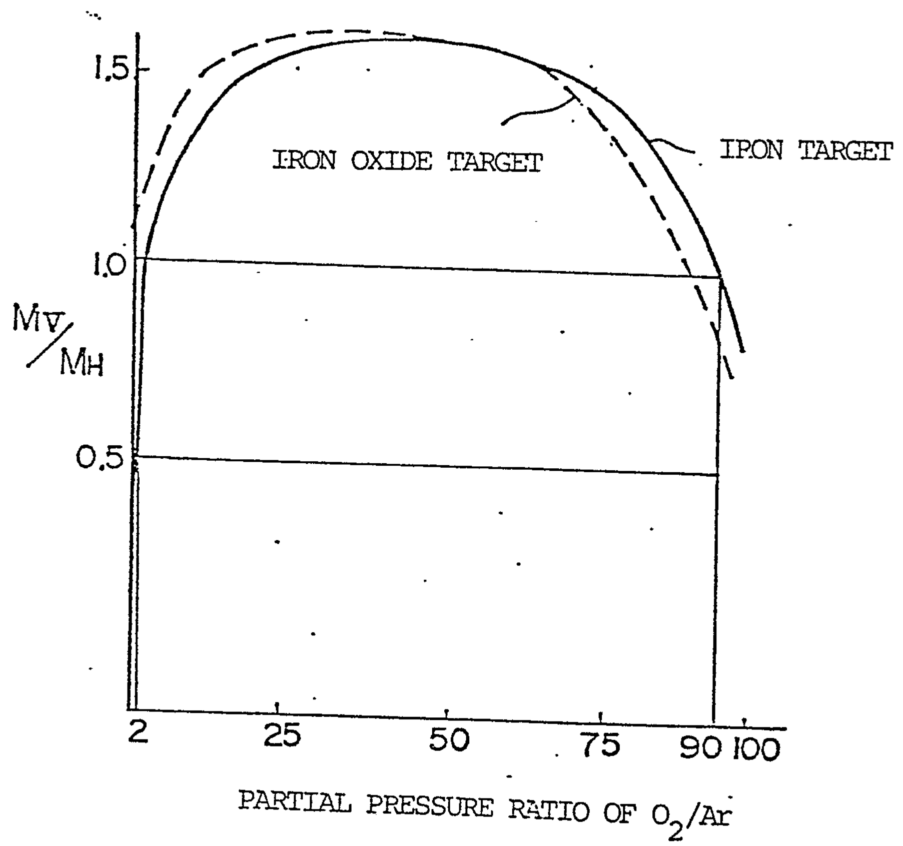
1.5
1.0
0.5
Mv/MH
IRON OXIDE TARGET
IRON TARGET
2
25
50
75
90
100
PARTIAL PRESSURE RATIO OF O2/Ar

FIG. 8

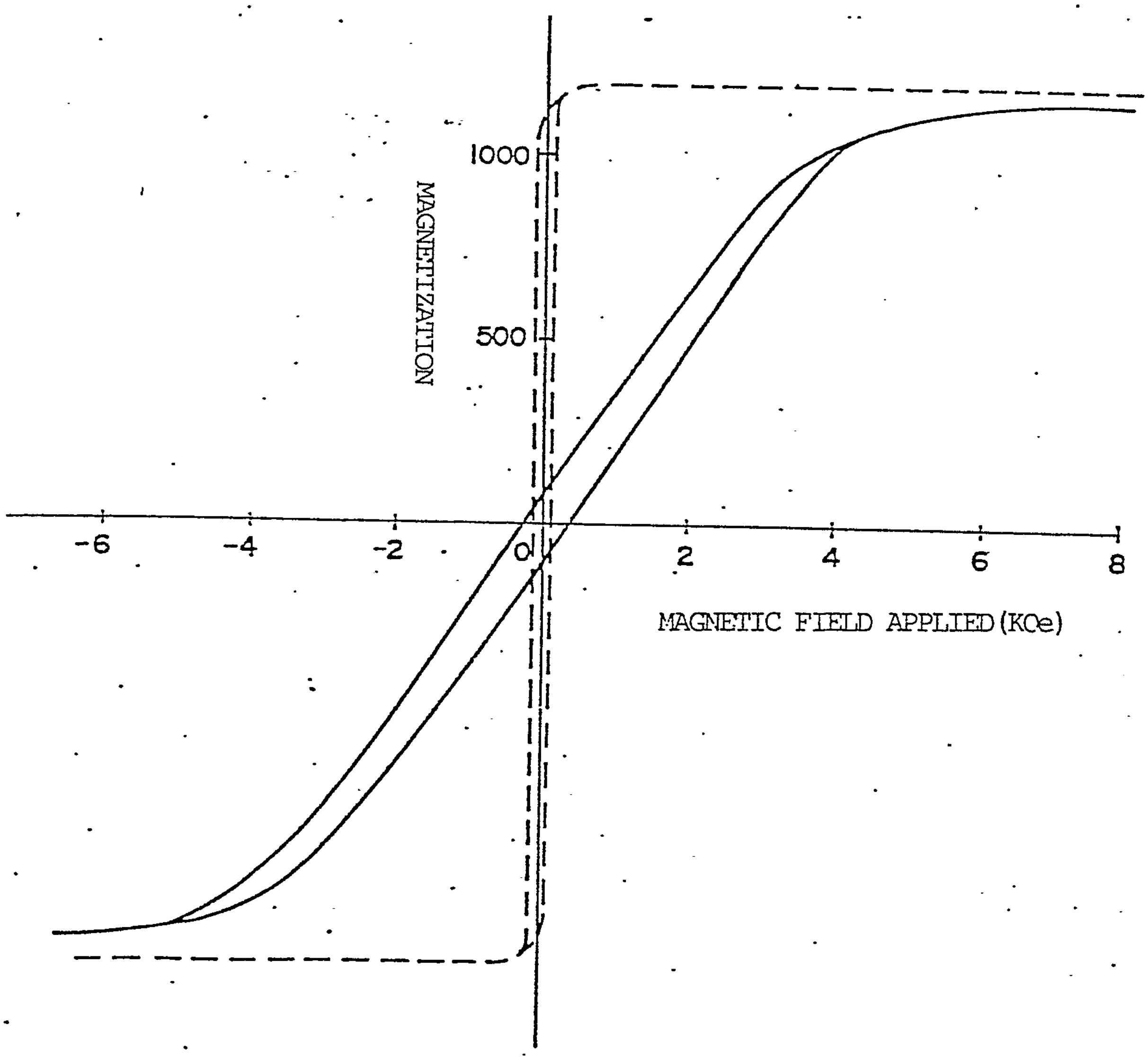
1000
500
MAGNETIZATION
-6
-4
-2
0
2
4
6
8
MAGNETIC FIELD APPLIED (KOe)

FIG. 9

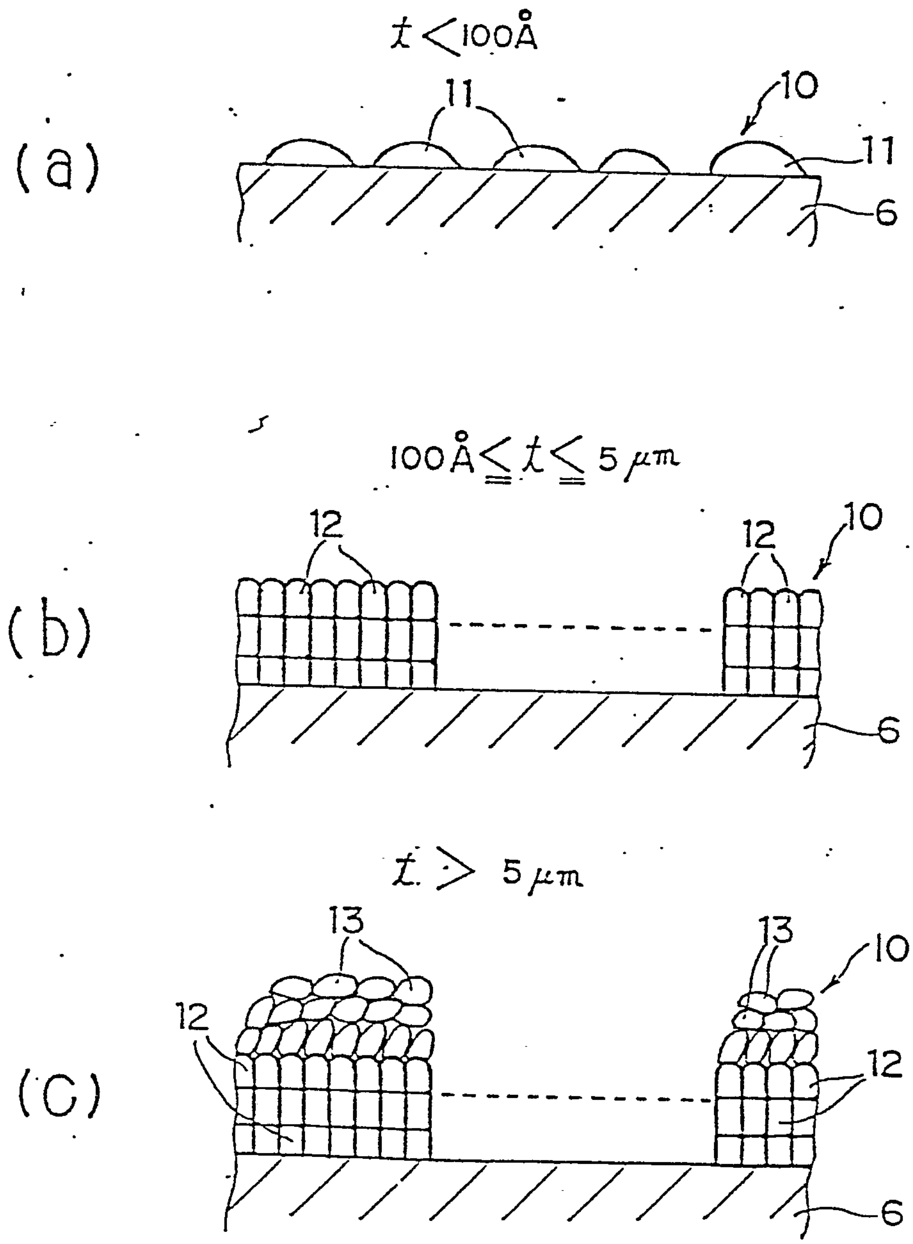

FIG. 10

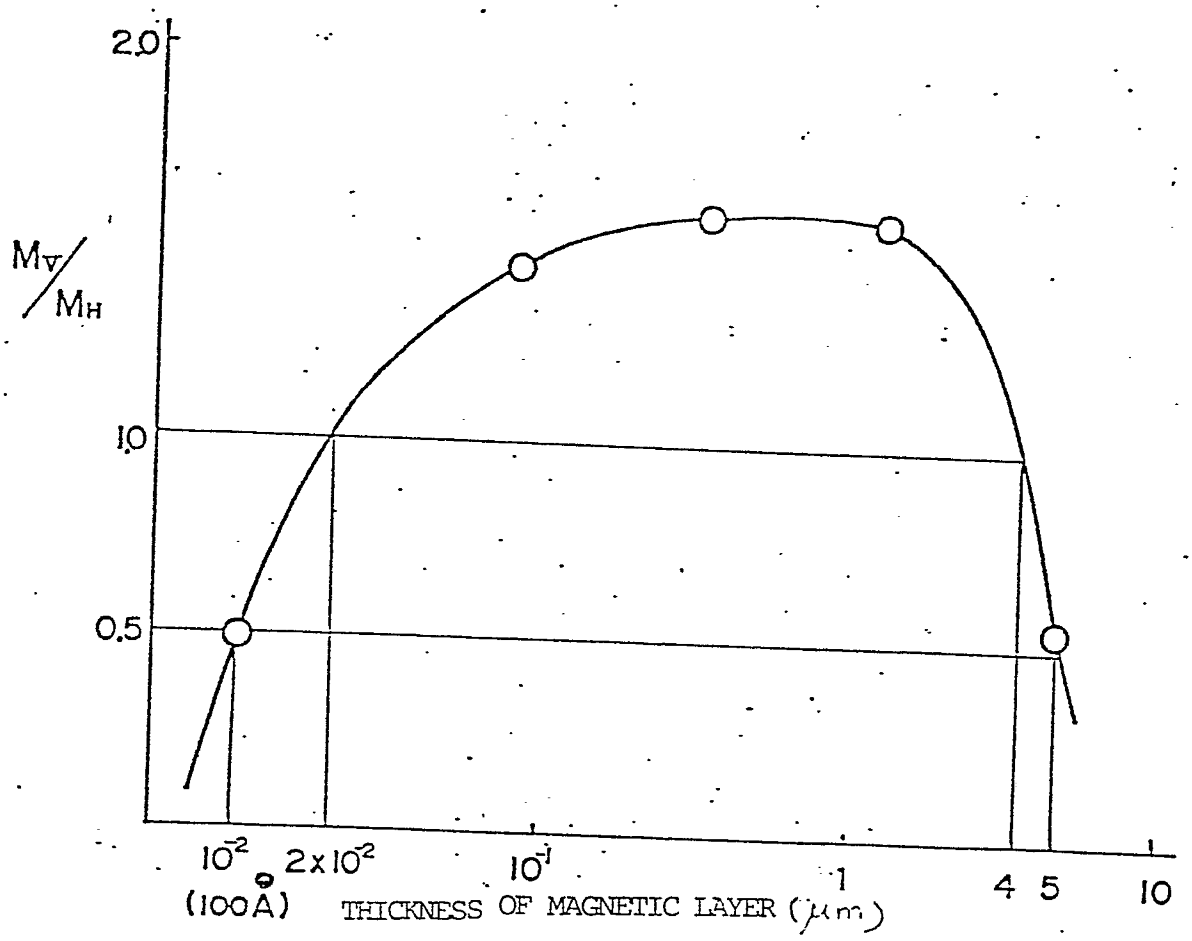
2.0
Mv/MH
1.0
0.5
$10^{-2}$
(100Å)
$2\times10^{-2}$
$10^{-1}$
1
4
5
10
THICKNESS OF MAGNETIC LAYER (μm)

FIG. 11

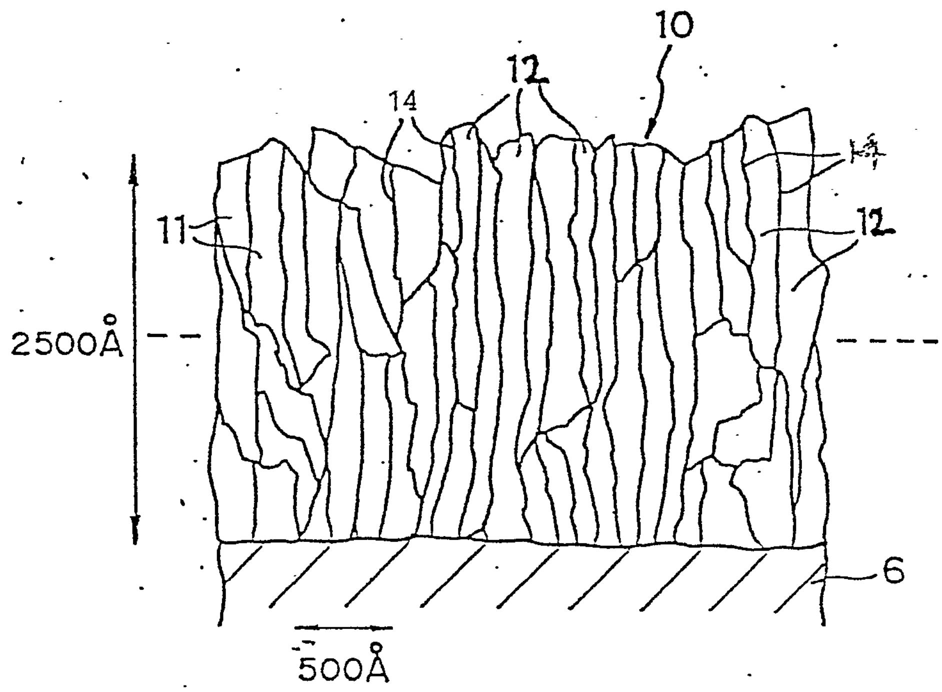

FIG. 12

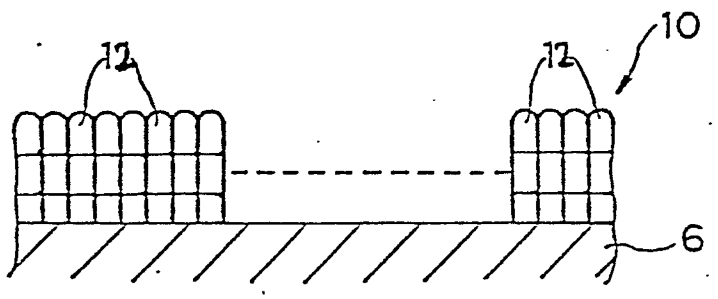
12
12
10
6

FIG. 13

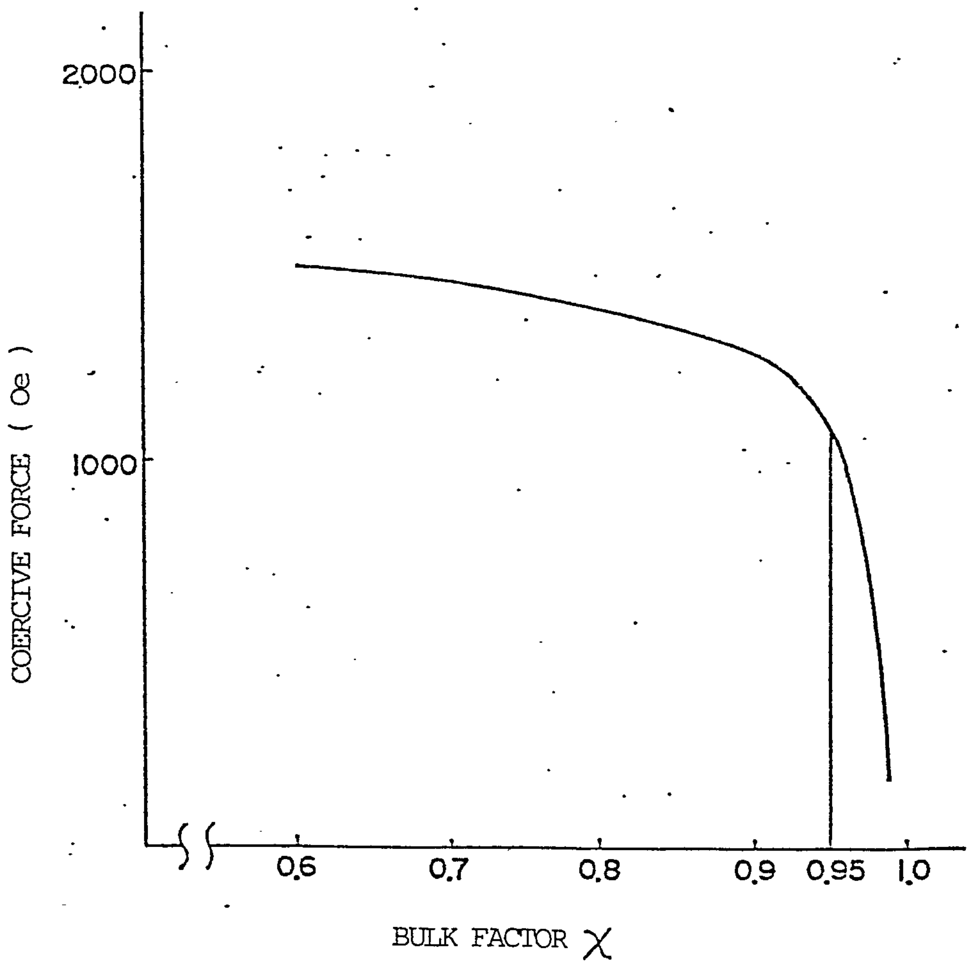
2000
1000
COERCIVE FORCE ( Oe )
0.6
0.7
0.8
0.9
0.95
1.0
BULK FACTOR χ

FIG. 14

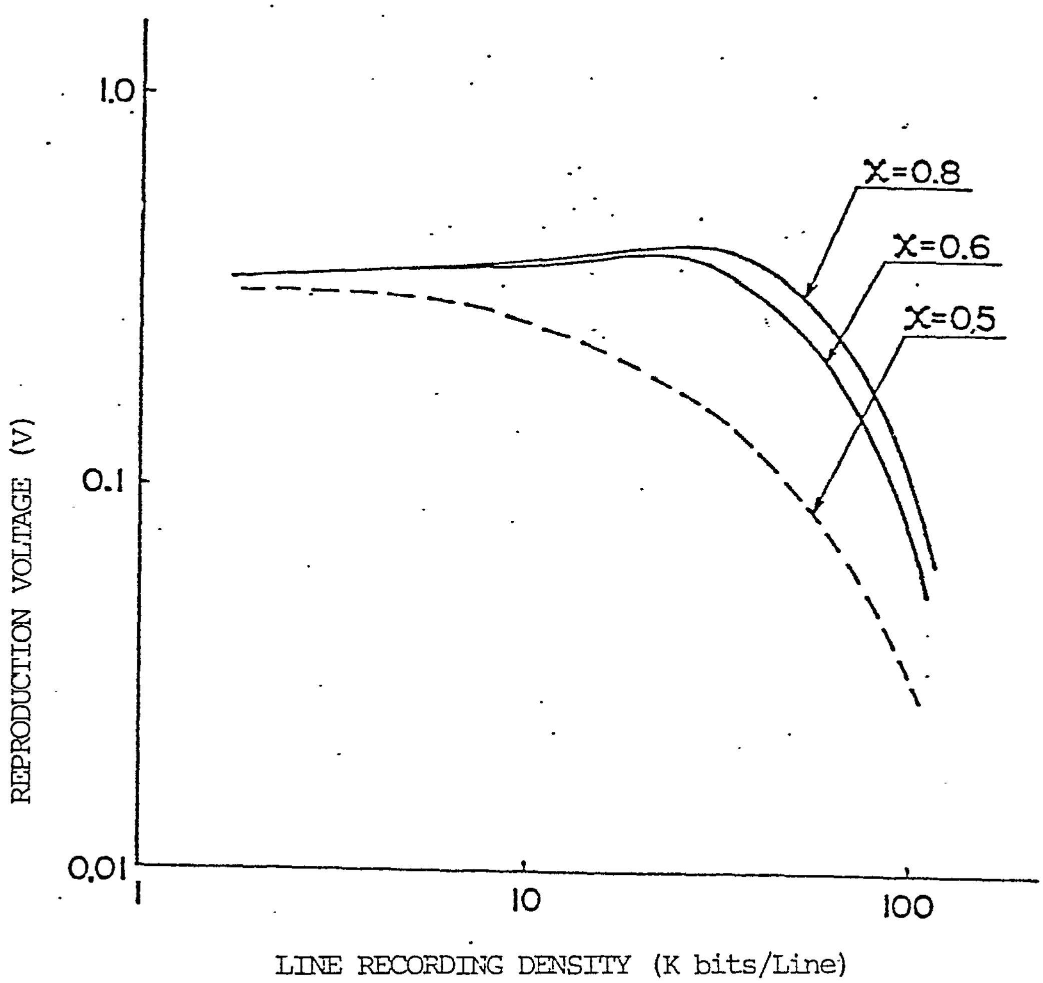

X=0.8
X=0.6
X=0.5
1.0
0.1
0.01
1
10
100
REPRODUCTION VOLTAGE (V)
LINE RECORDING DENSITY (K bits/Line)

FIG. 15

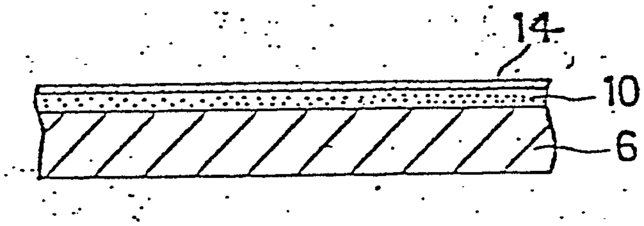
14
10
6

FIG. 16

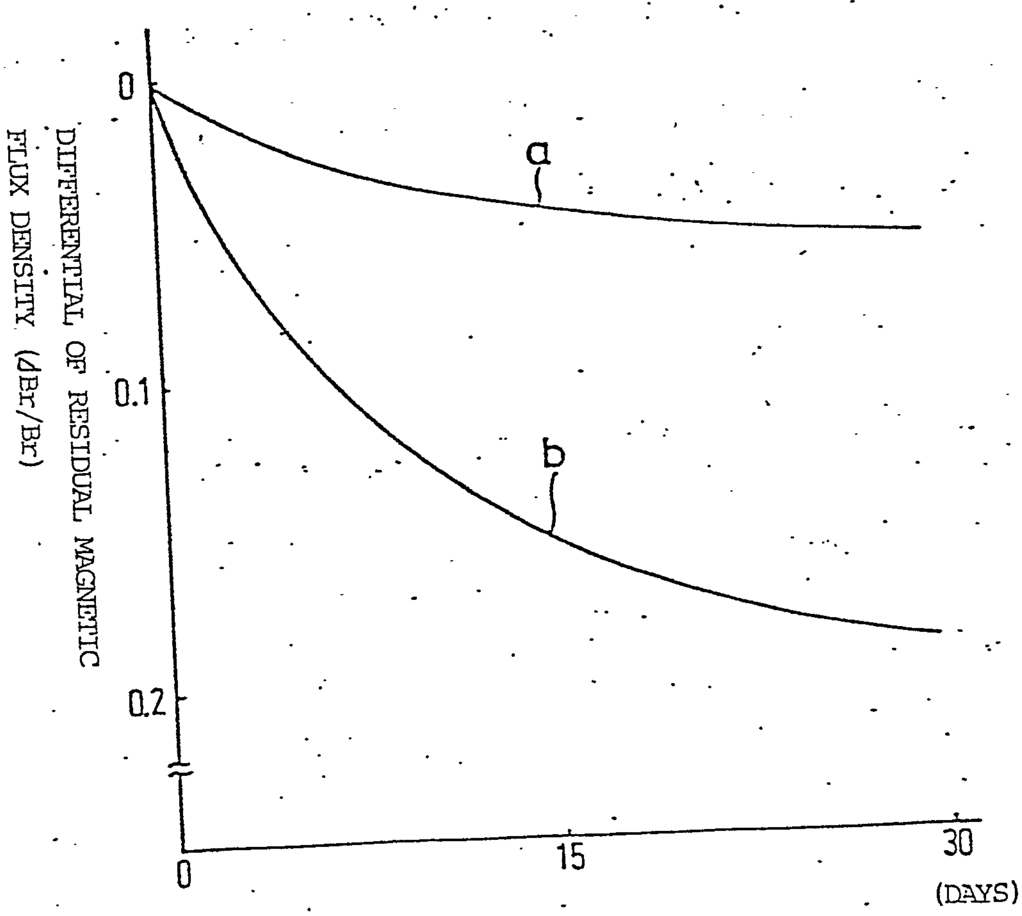
DIFFERENTIAL OF RESIDUAL MAGNETIC FLUX DENSITY (ΔBr/Br)
0
0.1
0.2
a
b
0
15
30
(DAYS)

FIG. 17

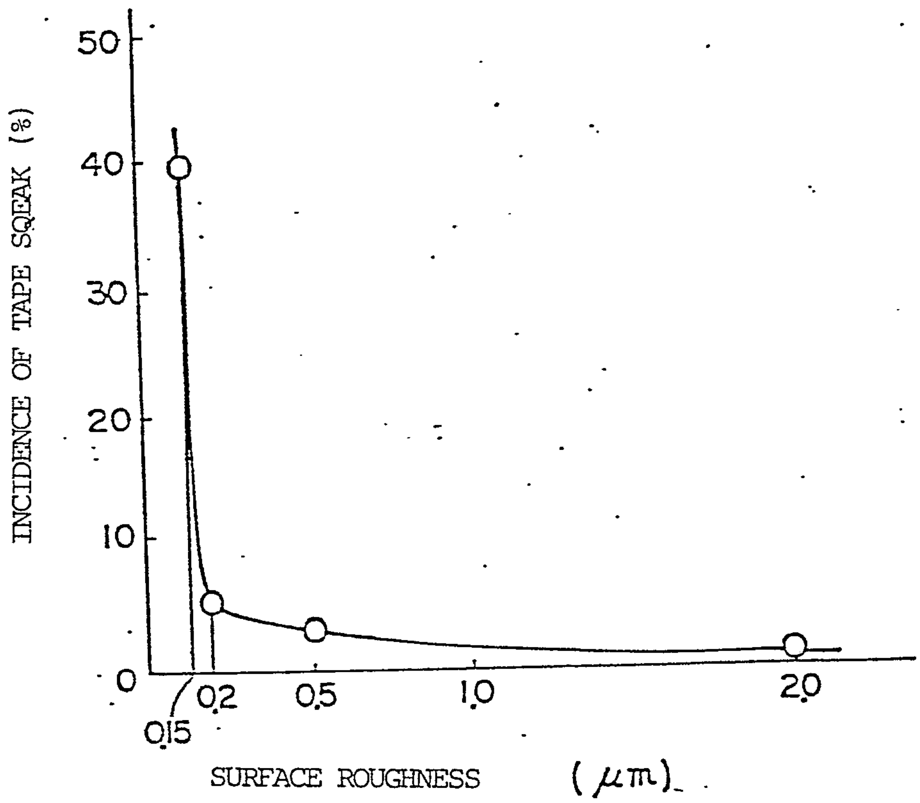
INCIDENCE OF TAPE SQEAK (%)
50
40
30
20
10
0
0.15
0.2
0.5
1.0
2.0
SURFACE ROUGHNESS (μm)

FIG. 18

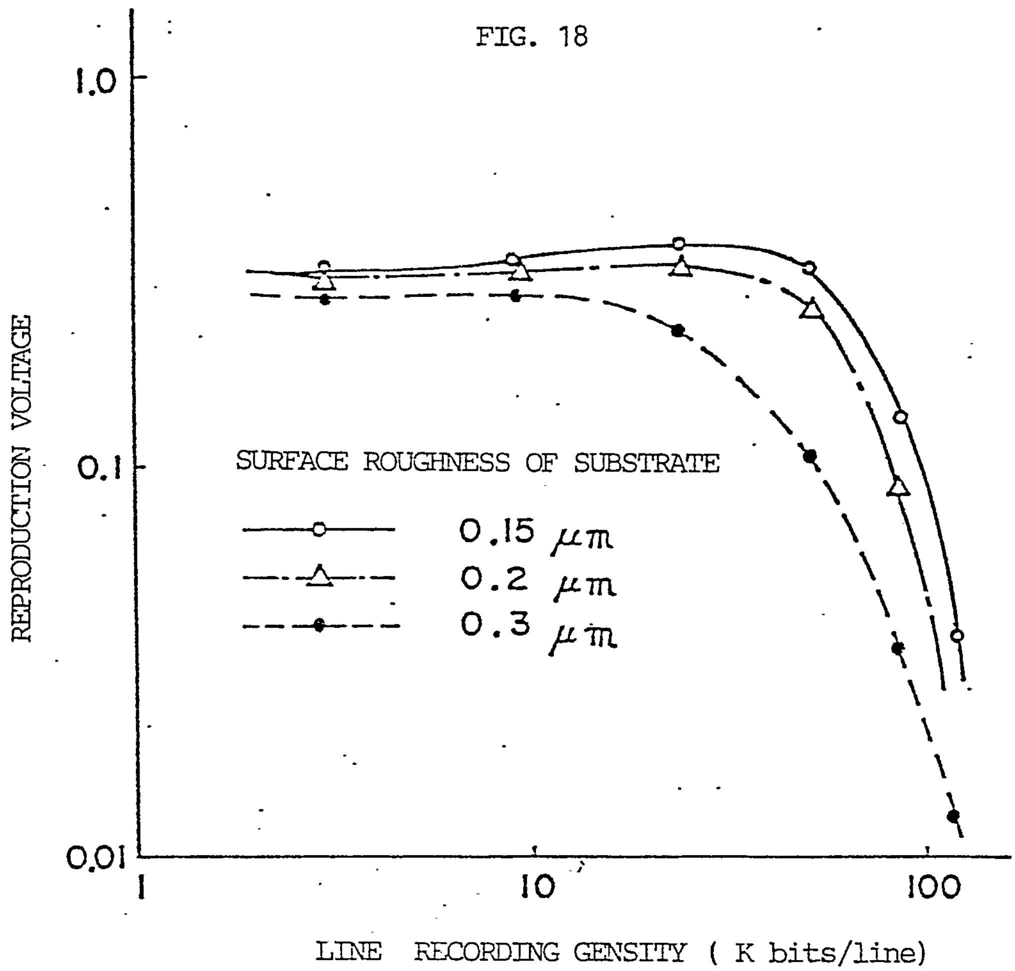
1.0
0.1
0.01
REPRODUCTION VOLTAGE
SURFACE ROUGHNESS OF SUBSTRATE
0.15 μm
0.2 μm
0.3 μm
1
10
100
LINE RECORDING GENSITY ( K bits/line)

FIG. 19

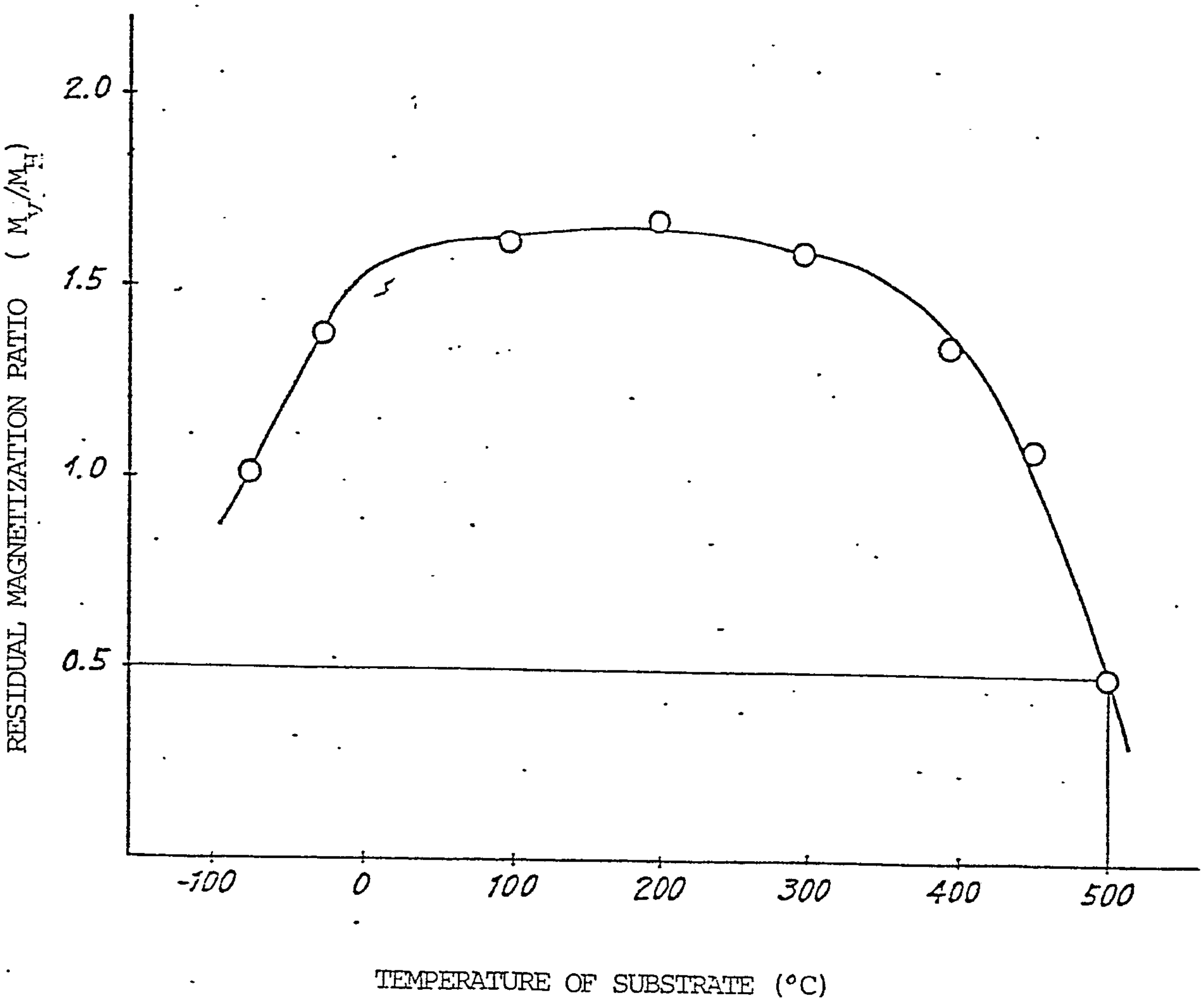
RESIDUAL MAGNETIZATION RATIO ( $M_V/M_H$ )
2.0
1.5
1.0
0.5
-100
0
100
200
300
400
500
TEMPERATURE OF SUBSTRATE (°C)

FIG. 20

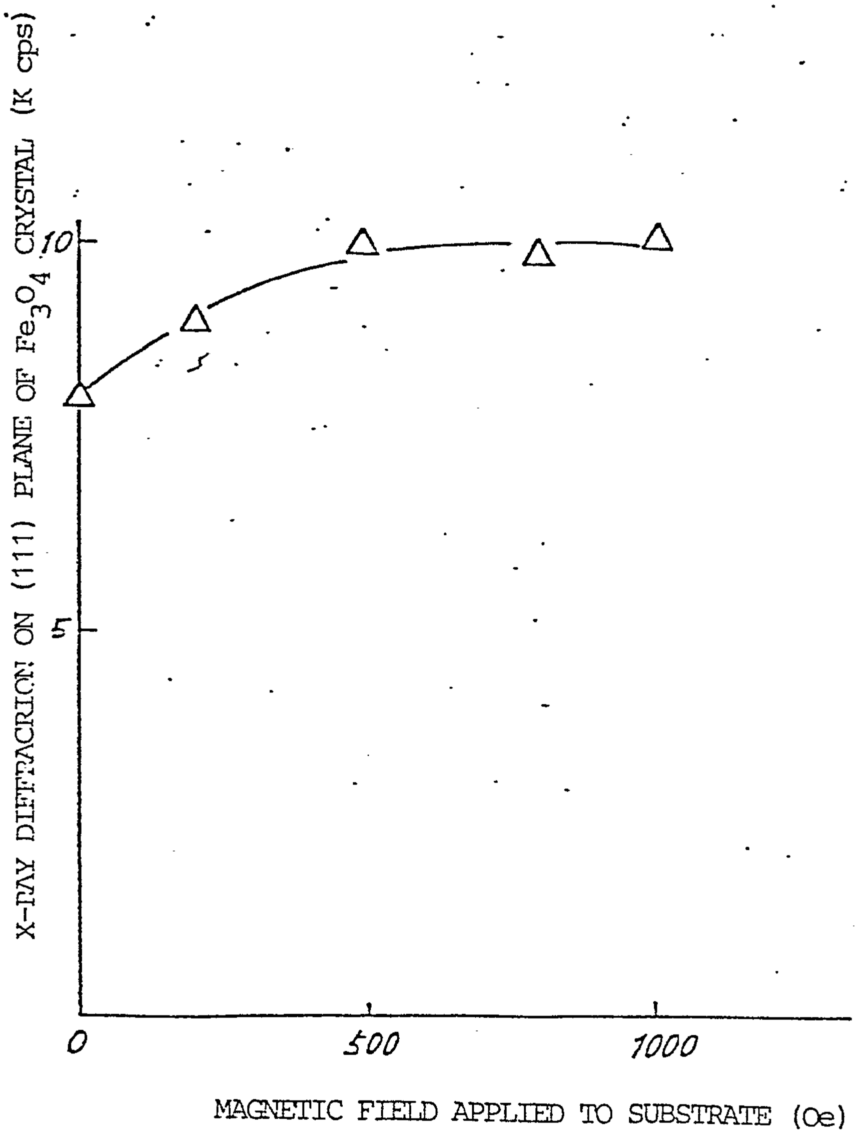
X-RAY DIFFRACTION ON (111) PLANE OF $Fe_3O_4$ CRYSTAL (K cps)
10
5
0
500
1000
MAGNETIC FIELD APPLIED TO SUBSTRATE (Oe)

FIG. 21

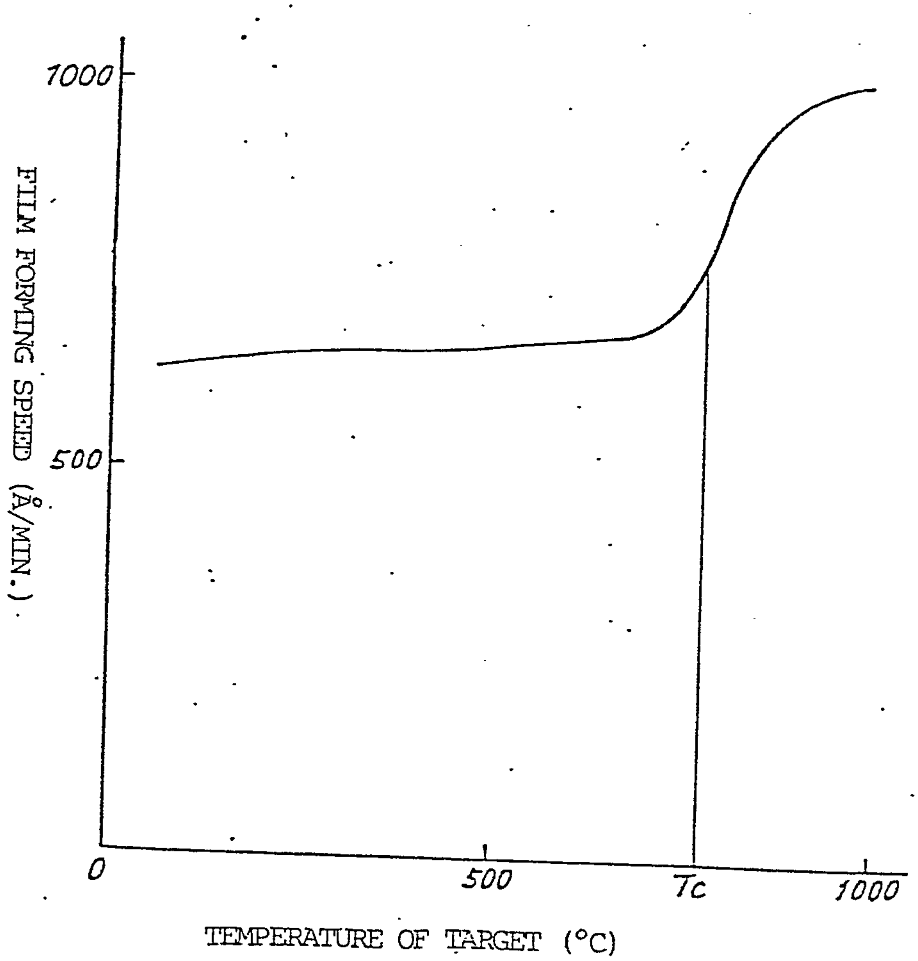
1000
500
FILM FORMING SPEED (Å/MIN.)
0
500
Tc
1000
TEMPERATURE OF TARGET (°C)

FIG. 22

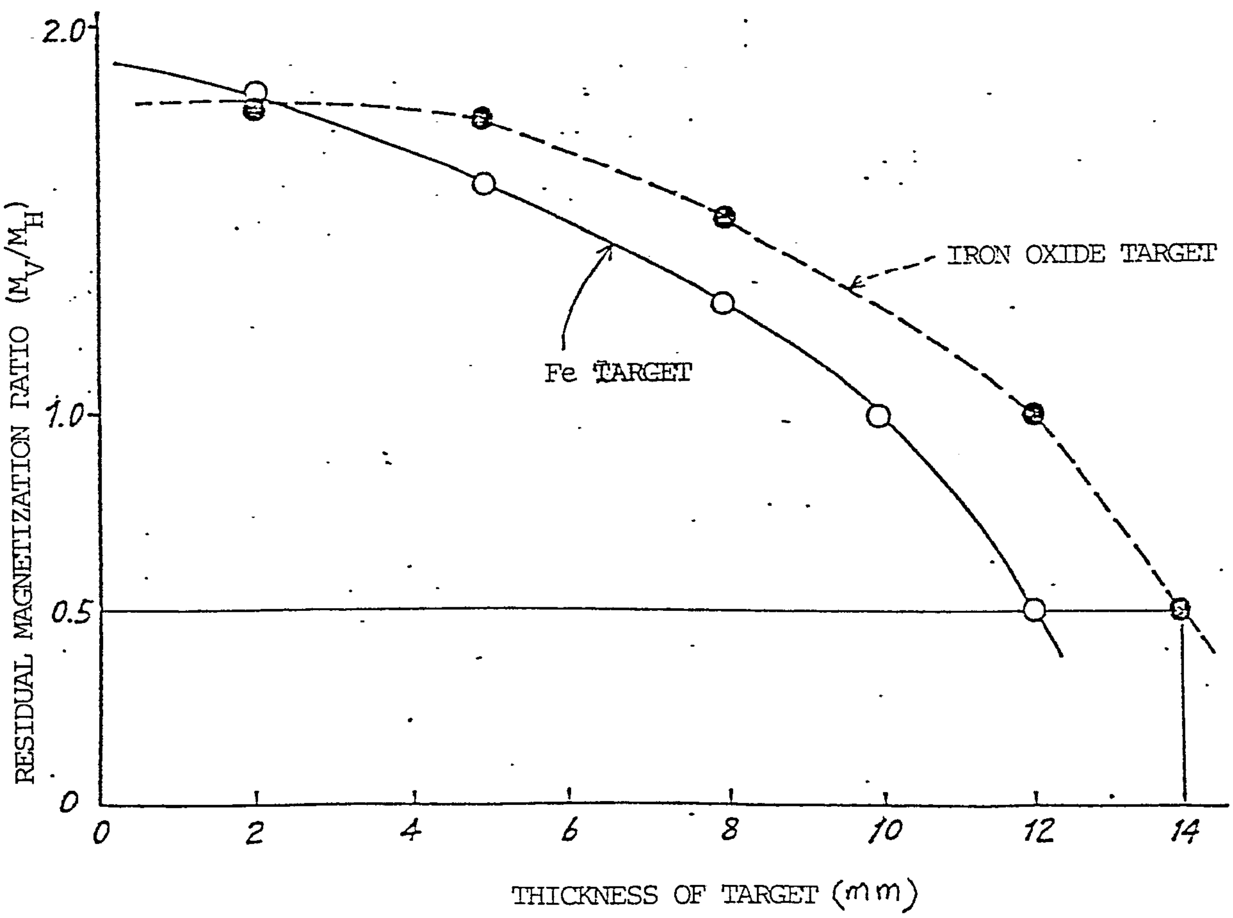
2.0
1.0
0.5
0
RESIDUAL MAGNETIZATION RATIO ($M_V/M_H$)
IRON OXIDE TARGET
Fe TARGET
0
2
4
6
8
10
12
14
THICKNESS OF TARGET (mm)

FIG.23

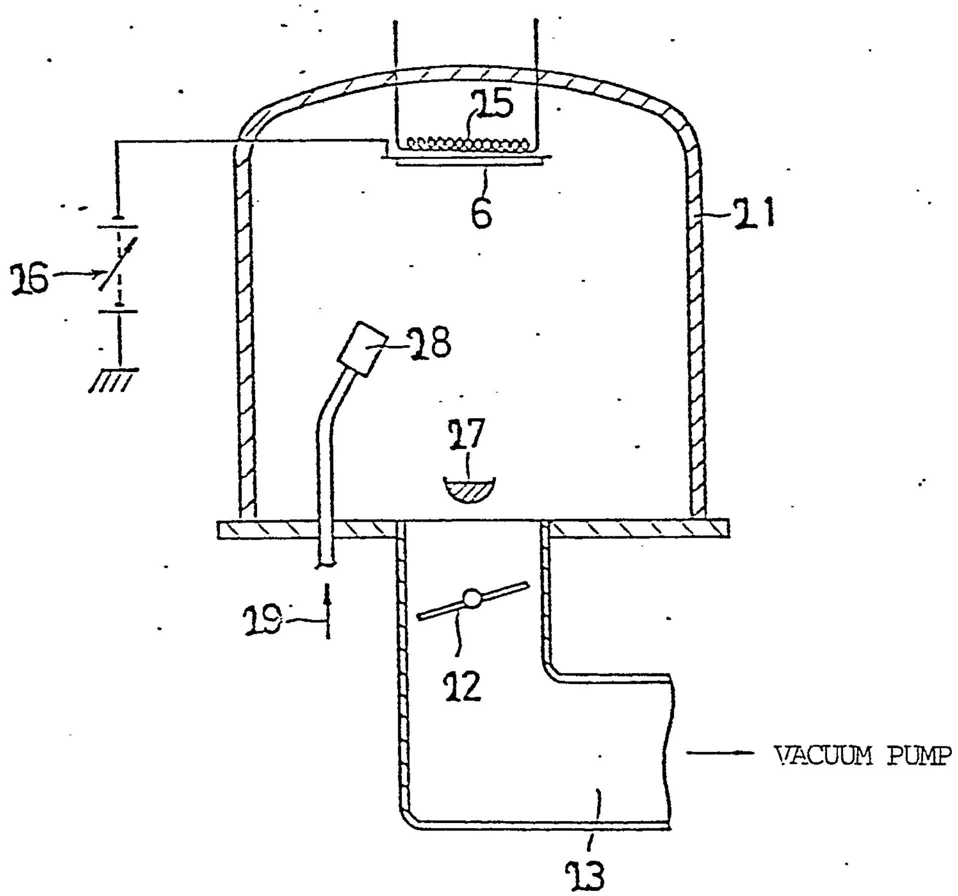

FIG. 24